# EUROPEAN PATENT APPLICATION

(11) **EP 0 908 724 A1**
(43) Date of publication of application: **14.04.1999**
(21) Application number: 97914575.2
(22) Date of filing: 31.03.1997
(51) Int. Cl.: G01N 33/49, G01N 33/53

(54) **BLOOD EXAMINATION ANALYSER, PRINTER FOR BLOOD EXAMINATION AND REAGENT CASSETTE IMAGING APPARATUS**

(30) Priority: 29.03.1996 JP 104111/96
(71) Applicant: Ortho-Clinical Diagnostics Kabushiki Kaisha, Tokyo 135 (JP)
(72) Inventor: KOSUGI, Mitsuaki, Hiki-gun, Saitama 355-01 (JP); FURUBOU, Takashi, Tsurugashima-shi, Saitama 350-02 (JP); SUGIOKA, Hitoshi, Tokyo 132 (JP)
(74) Representative: Fisher, Adrian John
(86) International application number: JP9701129
(87) International publication number: WO9737219

(57) **Abstract**

A blood test analyzing apparatus for analyzing a blood test result in case where the blood test is performed by using a reagent cassette which includes a plurality of columns and data area, one of an anti-serum reagent and buffer liquid being sealed into at least one of the plurality of columns, and data for specifying one of the anti-serum reagent and the buffer liquid being written in the data area. This apparatus comprises: an inputting means for inputting a test result of the reagent cassette; a data reading means for reading data written in the data area of the reagent cassette; and a blood test analyzing means for analyzing a result of a blood test on the basis of the data read by the data reading means and the test result inputted by the inputting means.

## Description

### Technical Field

This invention relates to a blood test analyzing apparatus to be used in a facility such as a hospital.

### Background Art

Various tests including an ABO blood typing test are performed in a hospital and so forth. In such blood tests, a determination of the blood test is the result of the individual differences of each tester because it is difficult to judge the state of agglutination involved in a blood test.

Further, conventionally, the information from specimens and the information from patients are not treated on a unified basis. Therefore, it is difficult to find the real cause among many possible causes in a limited time period when an abnormality occurs in a test.

As explained above, blood tests are very troublesome and it is difficult to make an objective judgment of blood tests accurately.

### Disclosure of the Invention

The present invention is made in view of the above points. Accordingly, the object of the present invention is to provide a blood test analyzing apparatus, a blood test printing apparatus and a reagent cassette imaging apparatus for using this apparatus, which aid a tester so that the tester can easily make decisions concerning a blood test such as a blood typing test.

In order to accomplish the above object, a blood test analyzing apparatus according to the present invention is provided for analyzing a blood test result in a case where the blood test is performed by using a reagent cassette which includes a plurality of columns and a data area, one of an anti-serum reagent and buffer liquid being sealed into at least one of the plurality of columns, and data for specifying one of the anti-serum reagent and the buffer liquid being written in the data area, and the apparatus comprises: an inputting means for inputting a test result of the reagent cassette; a data reading means for reading data written in the data area of the reagent cassette; and a blood test analyzing means for analyzing a result of a blood test on the basis of the data read by the data reading means and the test result inputted by the inputting means. Since a reagent cassette having a plurality of columns is used, and the blood test result of the plurality of columns is analyzed, an objective and accurate blood test can be carried out.

Further, a blood test printing apparatus according to the present invention is for printing a test result by receiving data from an image processing apparatus, which processes an image to a reagent cassette having a plurality of columns, and which outputs data corresponding to a level of agglutination in a column, and comprises: a memory for storing a plurality of bit map images showing a state of agglutination corresponding to a level of agglutination in the column; a data extracting means for extracting agglutination level data showing a level of agglutination from the image processing apparatus; and a printing means for selecting and printing a bit map image corresponding to agglutination level data extracted by the data extracting means in each of the columns.

Moreover, a reagent cassette imaging apparatus according to the present invention is provided for imaging a state of agglutination of each column of a reagent cassette having a plurality of columns, and comprises: a camera for imaging the reagent cassette; a supporting member which is placed at forward portion of a lens of the camera for supporting a holder for holding the reagent cassette; and a plain light which is provided to a position distant from the holder at opposite side of the camera on the supporting member to radiate the reagent cassette.

### Brief Description of the Drawings

Fig. 1 is a figure showing the structure of the blood transfusion test system according to the embodiment of the present invention.
Fig. 2 is an illustrative figure showing the operations of the distribution of the reagent red blood cells or reagent cassettes to each of the facilities and the transferring of the reagent red blood cells and antigen profile information of reagent cassettes performed by a center station.
Fig. 3 is a figure illustrating the operations of a facility station.
Fig. 4 is a figure showing an outline of an example of a reagent cassette.
Fig. 5 is a figure showing an outline of an example of a reagent cassette.
Fig. 6 is a flowchart showing the operations at the time of the initiation in a facility station.
Fig. 7 is a flowchart showing the detailed operations of the reception of blood cells.
Fig. 8 is a flowchart showing the detailed operations of the reception of specimens.
Fig. 9 is a flowchart showing the detailed operations of the input of results of specimens.
Fig. 10 is a figure showing a window for inputting the results of specimen tests.
Fig. 11 is a flowchart showing the operations of an antibody identification procedure of Fig. 6.
Fig. 12 is a flowchart which follows Fig. 11, showing the operations of the antibody identification procedure of Fig. 6.
Fig. 13 is a figure showing an image window where the antibody identification is performed referring to an antigen profile with an elimination method.
Fig. 14 is a figure showing a window where the antibody identification is performed using supplemental reagent red blood cells after the antibody identification indicated in Fig. 13 is completed.
Fig. 15 is a flowchart showing the operations of an ABO typing judgment.
Fig. 16 is a flowchart showing the operations of the judgment of a Rho (D) test.
Fig. 17 is a flowchart showing the operations of the judgment of a Rh-hr test.
Fig. 18 is a flowchart showing the operations of the judgment of a direct anti-globulin test (DAT).
Fig. 19 is a flowchart showing the operations of the judgment of a cross-matching test.
Fig. 20 is a flowchart showing the operations of the judgment of an irregular antibody test.
Fig. 21 is a block diagram showing a structure of a printer for printing the agglutinated state and so forth of the reagent cassette.
Fig. 22 is a diagram showing data transferred from an image processing apparatus.
Fig. 23 is a dump list showing the output state of the data presenting by hexadecimal numbers.
Fig. 24 is a diagram showing a concrete example of a printed document outputted from the printer.
Fig. 25 is a flowchart showing a determination interpretation printing process of the data transferred from the image processing apparatus.
Fig. 26 is a flowchart showing an image of the column and the operation of an alarm sign in every column.
Fig. 27 is a inclined view of a cassette imaging apparatus used by connecting to the terminal computer.
Fig. 28 is a side view of Fig. 27 in view from an arrow A.
Fig. 29 is a block diagram showing an electrical structure of the cassette imaging apparatus shown in Fig. 28.

### Best Mode for Carrying Out the Invention

Next, embodiments of the present invention are explained in detail with reference to the drawings.

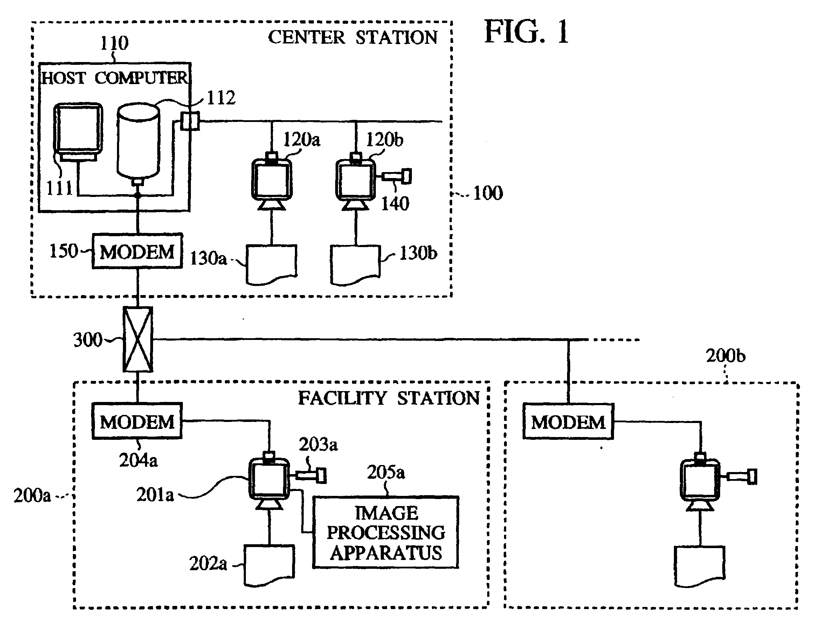

Fig. 1 is a figure showing a structure of the blood transfusion test system according to an embodiment of the present invention. In the same figure, a reference numeral 100 denotes a center station which inputs antigen profile information and which transmits the antigen profile information via a public telephone line 300, 200a and 200b respectively denote a facility station (a blood test analyzing apparatus) which receives the antigen profile information transmitted by the center station 100. The center station 100 includes a host computer 110, terminal computer 120a and a terminal computer 120b. Printers 130a, 130b are connected to the terminal computers 120a, 120b respectively. In addition, a modem 150 is connected to the host computer 110 so that the host computer can communicate with an external apparatus. A bar code reader 140 is connected to the terminal computer 120b. The host computer 110 includes a main frame portion 111 in which a CPU is mounted, and a hard disk 112.

On the other hand, facility stations 200a and 200b, installed at facilities such as a hospital are connected to the public telephone line 300. In Fig. 1, only two facility stations are illustrated. However, it is possible that more than two facility stations are connected to the public telephone line 300. Here, only the functions of the facility stations 200a is explained as an example because the facility stations 200a and 200b are substantially the same. The facility station 200a includes a terminal computer 201a, a printer 202a connected to the terminal computer 201a, a bar code reader 203a and a modem 204a which is connected to the public telephone line 300. A reference numeral 205a denotes an image processing apparatus which inputs an image of a test reaction of the a reagent cassette.

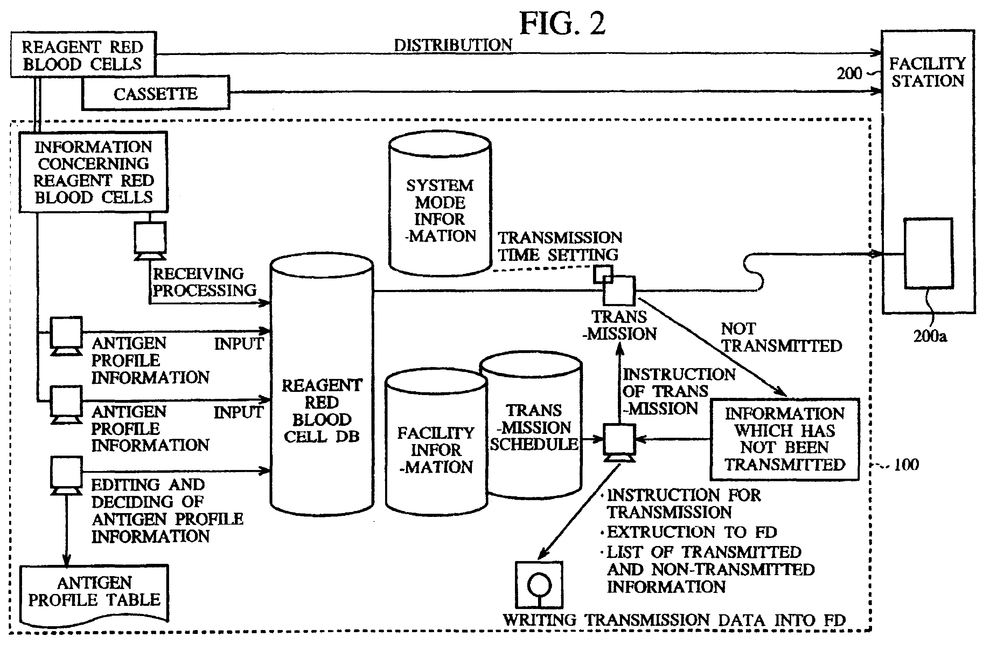

Fig. 2 is an illustrative figure showing operations of the distribution of the reagent red blood cells or reagent cassettes to each of the facilities and the transferring of antigen profile information of the reagent red blood cells and reagent cassettes performed by the center station 100. As shown in Fig. 2, reagent red blood cells and reagent cassettes are delivered to the facilities such as a hospital and the information concerning reagent blood cells and reagent cassettes are stored in reagent red blood cell data base which is structured in the hard disk 112 of the host computer 110 of the center station 100. The kinds of the antigen composition, lot numbers, donor numbers of the reagent blood cells, which are used for antibody screening and for antibody identification, are registered in this reagent blood cell data base. Further, the antigen profile information is manually input by a person with reference to an antigen profile table printed on a paper. The same antigen profile is input based on the same antigen profile table plurality of times and a supervisor confirms the input antigen profile information, thereby accurate information can be obtained. The information concerning the reagent red blood cells including the antigen profile information is automatically transmitted to the facilities to which the reagent red blood cells or reagent cassettes are delivered via the modem 150 and the public telephone line 300 at a predetermined time during night for example. In addition, the information concerning the reagent red blood cells should be reached to the facility prior to the arrival of the reagent red blood cells to the facility. Here, if a malfunction occurs in transmitting the information concerning the reagent red blood cells, a list of the pieces of information which have not properly been transmitted to the facilities is displayed on a display screen of the host computer 110. In addition, a procedure of re-transmitting the information is performed. The information concerning reagent red blood cells including the antigen profile is stored in a floppy disk and the floppy disk is sent to the facilities which do not have a communication device such as a modem._{,} Moreover, the floppy disk may be sent even to the facilities having a communication device as a security measure in case a communication cannot be made due to the malfunction of the communication network or a trouble of the modem. The operations of the facility station 200a can be performed on- line from the center station 100. Namely, remote maintenance of data base and so forth can be executed. Next, the operations of the facility station 200a installed in a hospital and so forth will be explained.

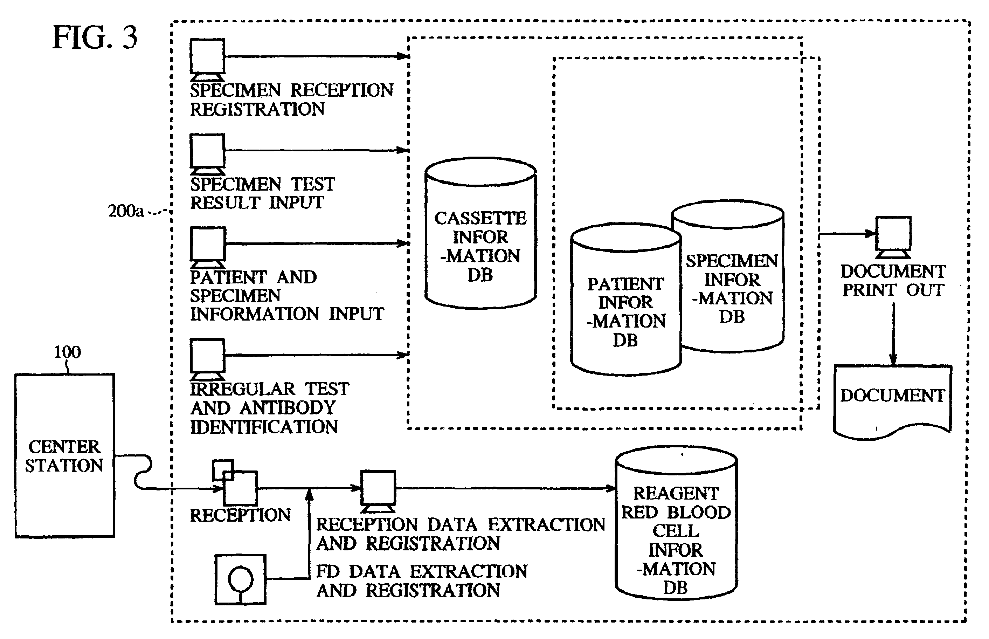

Fig. 3 is a figure illustrating the operations of the facility station 200a. As shown in the same figure, the analysis of a test result for a patient and the administration of the history of the test result are performed based on the information concerning the reagent red blood cells which are transmitted by the center station 100. In addition, the blood tests include an ABD blood typing test, DAT (Direct Anti-globulin Test), an Rh-hr factor test, an irregular antibody test, a cross-matching test and an antibody identification test. These tests will be explained in detail later. In other words, the facility station 200a can work as a blood test analyzing apparatus without the information concerning the reagent red blood cells transmitted from the center station 100.

The facility station 200a receives the information concerning the reagent red blood cells including the antigen profile information transmitted by the center station 100 or the facility station 200a receives a floppy disk containing the information concerning the reagent red blood cells including the antigen profile information. Further, the necessary information is extracted from the reagent red blood cell information and is stored in the reagent red blood cell data base. As a test specimen reception and registration procedure, patient (recipient of blood) information and test specimen information are registered. In addition, requested test items are set. Further, the reagent cassettes are reserved to use. Moreover, the information concerning the reagent cassettes is input by reading a bar code with the bar code reader 203a.

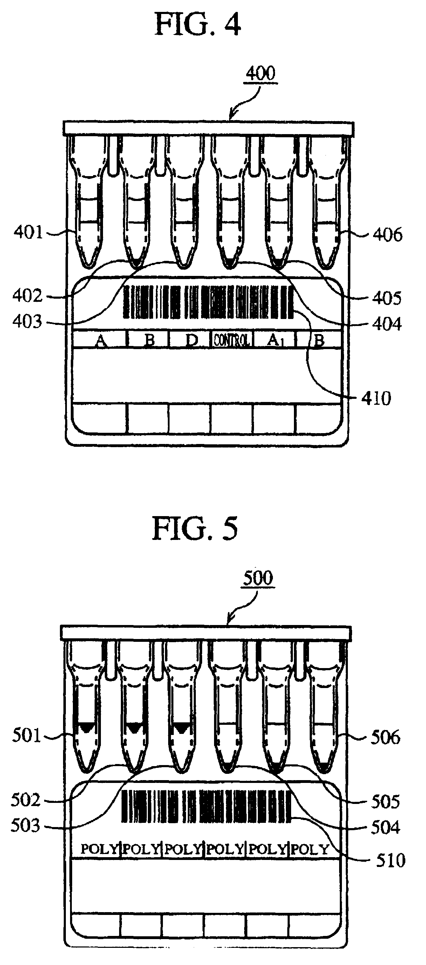

Fig. 4 is a figure showing an outlook of an example of a reagent cassette 400. As shown in this figure, columns 401 to 406 are provided on the reagent cassette 400. Anti-A serum, anti-B serum and anti-D serum are sealed into the columns 401 to 403 respectively. Different phosphoric acid buffers are sealed into columns 404 to 406 respectively. An ID number for specifying the reagent cassette 400, an ID number for specifying anti serums sealed into the columns 401 to 406 and other ID numbers are recorded as bar code information. In this reagent cassette 400, the state of the agglutination after centrifugal force is applied to the reagent cassette 400 after red blood cells as test specimens are put into the columns 401 to 406 indicates a result of the test. In addition, glass beads which are minute particles are sealed into the columns 401 to 406 in order to make the state of the agglutination clearer, and agglutinated red blood cells are captured by glass beads which show a filtering effect. On the other hand, non-agglutinated red blood cells subside at the bottoms of the columns 401 to 406 by passing through the glass beads.

A reagent cassette 500 shown in Fig. 5 is similar to the reagent cassette, and polyspecific coombs serum (mixture of anti-IgG serum, anti-C3b serum and anti-C3d serum) is sealed into the columns 501 to 506, so that a result of the test can be found by observing the state of agglutination after reagent red blood cells and blood of a patient are poured in the columns. A bar code 510 is printed on the surface of the reagent cassette 500, which is similar to the bar code 410 illustrated in Fig. 4.

Namely, the information about the reagent cassettes is input by reading the bar codes 410 and 510 with the bar code reader 203a at the facility station 200a. As a test result of a specimen test at the facility station 200a, the result of the test using the reagent cassette 400 or 500, i.e., each state of agglutination of the columns 401 to 406 of the reagent cassette 400 and of the columns 501 to 506 of the reagent cassette 500 is input by visual identification of a test performing person. Alternatively, each state of agglutination may be input automatically by an image processing apparatus 205a having a CCD camera and so on. In this case, the image processing apparatus 205a takes an image of the columns and inputs the state of agglutination of the columns by image processing. The image processing apparatus 205a makes a decision of a test result using an image processing algorithm working based on change of colors in the columns 401 to 406 and 501 to 506, then the decision of the test result is transferred to the terminal computer 201a. By inputting test results as explained above, a judgment of a result of an ABD typing test, DAT (Direct Anti-globulin test), an Rh-hr factor test and a cross-matching test are performed. The results of the specimen tests are stored in patient information data base and specimen information data base. In addition, retrieval of the information stored in each data base is possible. In the patient information data base, patient information is stored with patient IDs for specifying patients. In the specimen information data base, specimen information is stored with specimen IDs for specifying specimens. An elimination method is applied to the antigen profile information included in reagent red blood cell information based on the input states of agglutination of the columns 401 to 406 and 501 to 506 of the reagent cassettes 400 and 500, whereby antibody whose existence seems to be likely and antibody whose existence cannot be denied are displayed. In addition, probabilities of the identified antibodies are calculated and displayed. Further, when supplemental reagent blood cells are necessary to identify antibodies, a list of proposed kinds of reagent blood cells is displayed based on the antigen profile information.

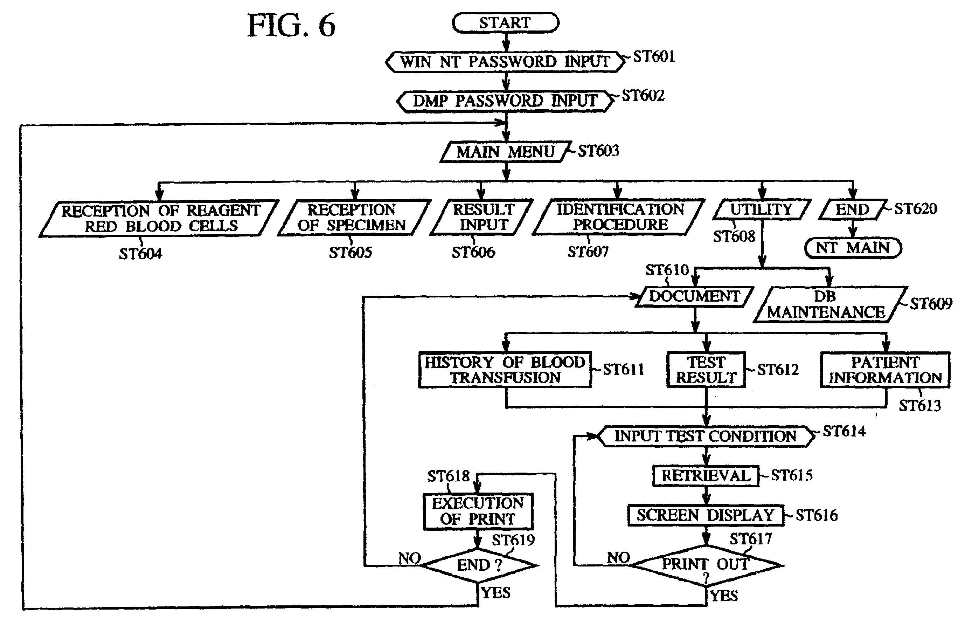

Next, the operations of the facility station 200a will be explained more in detail. Fig. 6 is a flowchart showing the operations at the time of the initiation. Here, the program runs on the Windows NT which is an operating system of the Microsoft cooperation. As shown in this figure, firstly, a password for opening Windows NT is input (step ST601), then a password for Data Management Program (DMP) is input (step ST602), and when these passwords are in conformity with the stored passwords respectively, a main menu is displayed (step ST603). When the reagent red blood cell reception procedure is selected in the main menu, the sequence shifts to this procedure (step ST604). When the specimen reception procedure is selected in the main menu, the sequence shifts to this procedure (step ST605). When the result input procedure is selected in the main menu, the sequence shifts to this procedure (step ST606). When the identification procedure is selected in the main menu, the sequence shifts to this procedure (step ST607). In addition, the detailed explanations of steps ST604 to ST607 will be explained later. When the utility is selected in the main menu (step ST608), either a data base maintenance procedure or a document printing procedure can be selected. When the data base maintenance procedure is selected, the sequence shifts to this procedure (step ST609). When the document printing procedure is selected (step ST610), one step from among blood transfusion history retrieval (step ST611), test result retrieval (step ST612) and patient information retrieval (step ST613) can be selected, and in these retrievals, after inputting retrieval conditions (step ST614), the retrieval is performed and the result of the retrieval is displayed (steps ST615, ST616). Then when the result should be printed on a paper (step ST617), the retrieved data are printed on a paper (step ST618). On the other hand, it is not necessary to print the retrieved data on a paper, the sequence shifts back to step ST614. In step ST619, when the document printing procedure is terminated, the sequence shifts back to step ST603 where the main menu of the data management program is displayed. Further, when "quit" is selected at the step ST603 (step ST620), the sequence shifts back to the main menu of the Windows NT.

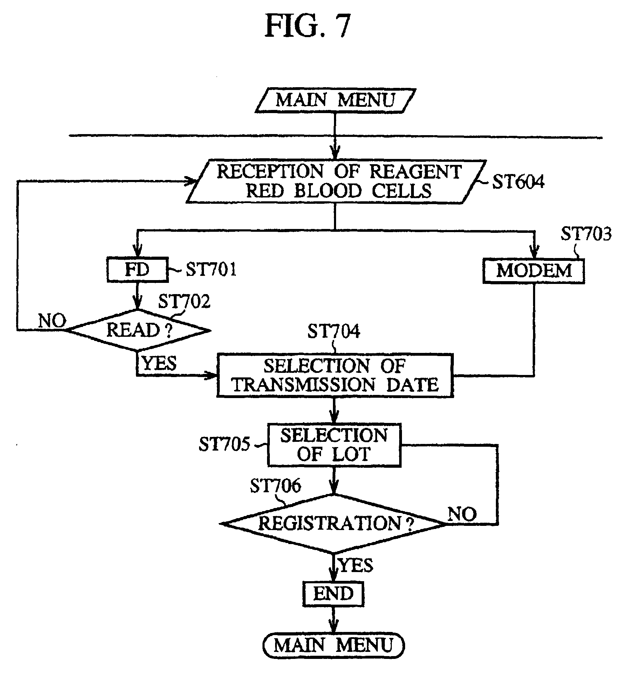

Fig. 7 is a flowchart showing the operations of the step ST604 of Fig. 6 in greater detail. At first, when the reagent red blood cells are received, either the reagent red blood cell information stored in a distributed floppy disk (steps ST701, ST702) or the reagent red blood cell information received via the modem 204a (step ST703) is selected to read. Next, when transmission date of reagent red blood cell information for the received reagent red blood cells and lot numbers are selected (steps ST704, ST705), selection for the registration is performed (step ST706), and when the registration is executed, the whole procedure is terminated and the sequence shifts back to the main menu of the data management program.

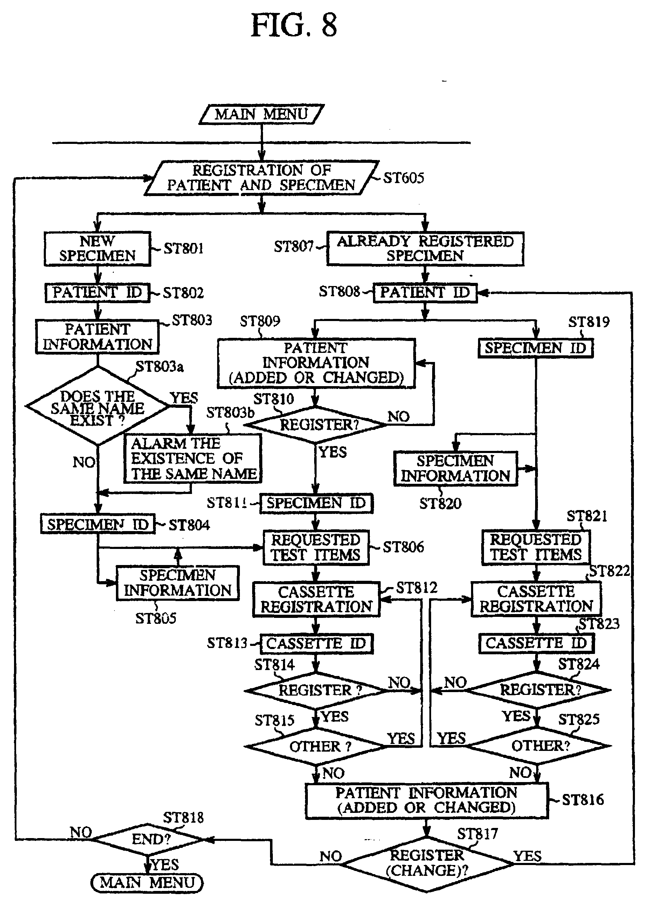

Fig. 8 is a flowchart showing the operations of the step ST605 of Fig. 6 in greater detail. At first, when a new specimen is to be registered (step ST801), a patient ID is input and information including the name of the patient and birth date of the patient is registered (steps ST802, ST803). And it is checked whether other patient whose name is accorded exists or not (step ST803a). The name of the patients is registered in the database with the patient ID, and the patient information database of the terminal computer 201a is referred from a patient ID as a key to check whether the same name patient exists or not. If the same name patient exists, for example, an alarm sentence like "There is a patient having the same name." is presented (step ST804a). As shown above, if the same name patient exists, since it may be registered erroneously, such alarm sentence is very important to present for safety. In addition, in the above-description, although the patient database is formed on the terminal computer 201a, it may be possible to access from the terminal computer to a host computer which is installed in a facility as the hospital and so on, and which has a database for the patient information. Next, a specimen ID is input and specimen information as to whether anti-coagulant is included or not for example is input (step ST805) and requested items for the test is input (step ST806). On the other hand, in a case where information of the specimen which has been registered should be added, a patient ID is input (step ST808), and when the patient information should be added or changed, registering procedure for the patient information is performed (steps ST809, ST810), then registration of a specimen ID is performed (step ST811) and the sequence shifts to the input procedure for requested test items (step ST806). Subsequently, registration procedure for reagent cassette to be used is performed (steps ST812 to ST815), and if it is not necessary to add or change other information (steps ST816 to ST817), when the whole procedures should be terminated, the sequence shifts back to the main menu. On the other hand, when the whole procedures should not be terminated, the sequence shifts back to the step ST605 (step ST818). In addition, when patient information is not to be added or changed, a specimen ID is input (step ST819) and specimen information is input (step ST820), and further, the registration procedure of requested items for the test and the registration procedure of the reagent cassette are performed (steps ST821 to ST825).

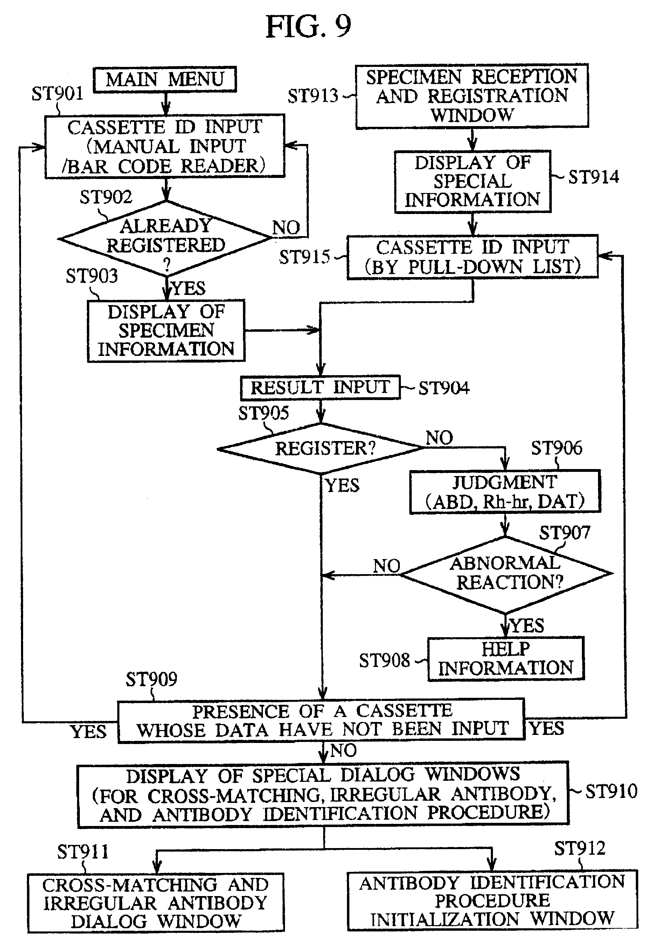

Fig. 9 is a flowchart showing the operations of the step ST606 of Fig. 6 in greater detail. At first, IDs of the reagent cassettes are input manually or with the bar code reader (steps ST901 and ST902). The information concerning the reagent cassettes is stored in the reagent cassette data base with reagent cassette IDs so that the information can be retrieved. If the reagent cassette has already been registered, a specimen information input window is displayed (step ST903) and results of the tests are input (step ST904). When the results are not registered, judgments of blood tests including ABD, Rh-hr, DAT blood tests are made (steps ST906). The judging operations of these tests are explained later in greater detail. As a result of these blood tests, when an abnormal reaction occurs (step ST907), possible causes are displayed. Abnormal patterns in each of the tests and causes of the abnormal patterns are related to each other and stored in the abnormal cause data base structured in the hard disk of the computer 201a at the facility station 200a and the possible causes are displayed after retrieving the possible causes from the abnormal cause data base (ST908). In addition, when the input results of the tests are registered at step ST905 or when it is decided that no abnormalities occur at step ST907, the information is input as to whether there are the reagent cassettes which have not been input or not (step ST909), and if there is such a reagent cassette, the sequence shifts back to the step ST901. On the other hand, if the reagent cassette which has not been input does not remain, a special dialog window is displayed (step ST910). In this window, a selection of dialog windows for cross-matching and irregular antibody, and antibody identification initial window can be made (step ST912). The step of inputting test results can be reached from the specimen reception and registration window (step ST913) through the display of specimen information window (step ST913). Then, an input of cassette ID is performed by selecting a cassette ID from cassette IDs in the pull-down list on the specimen reception and registration window (step ST915). Thereafter, the sequence shifts to the step ST904 where the test results can also be input.

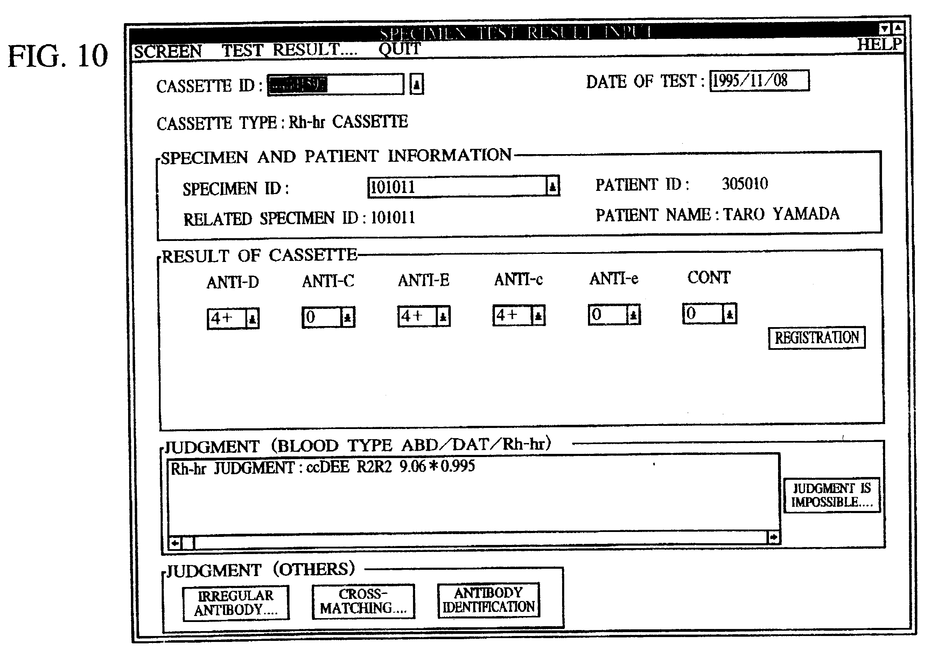

Fig. 10 is a figure showing a window for inputting results of specimen tests. As shown in the center portion of this figure, results of each column are input and registered. The results of the tests are indicated as one of "0", "W+", "1+", "2+", "3+", "4+" respectively depending on the degree of the states of agglutination.

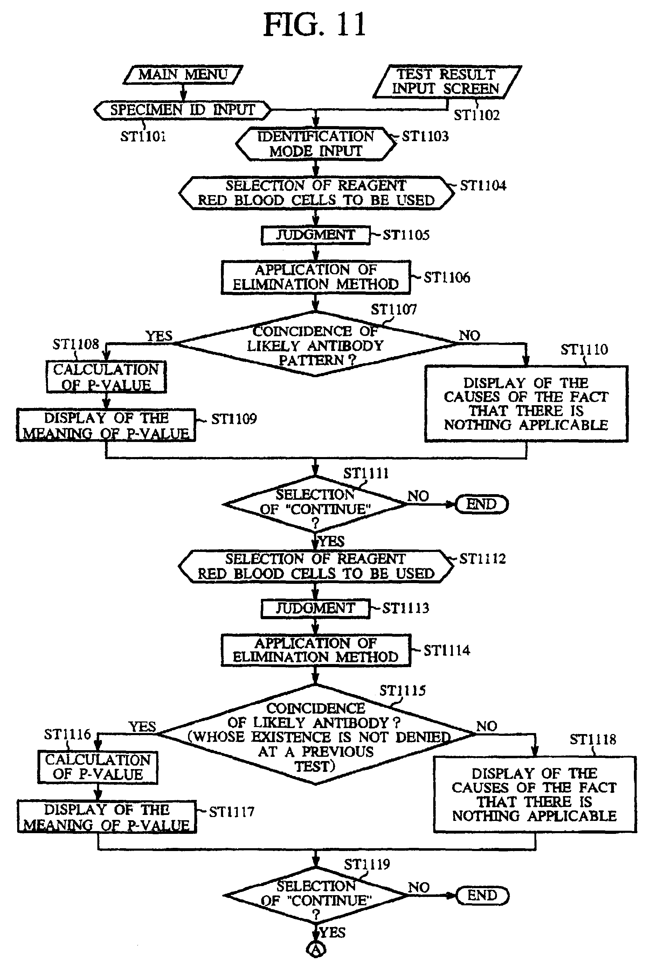

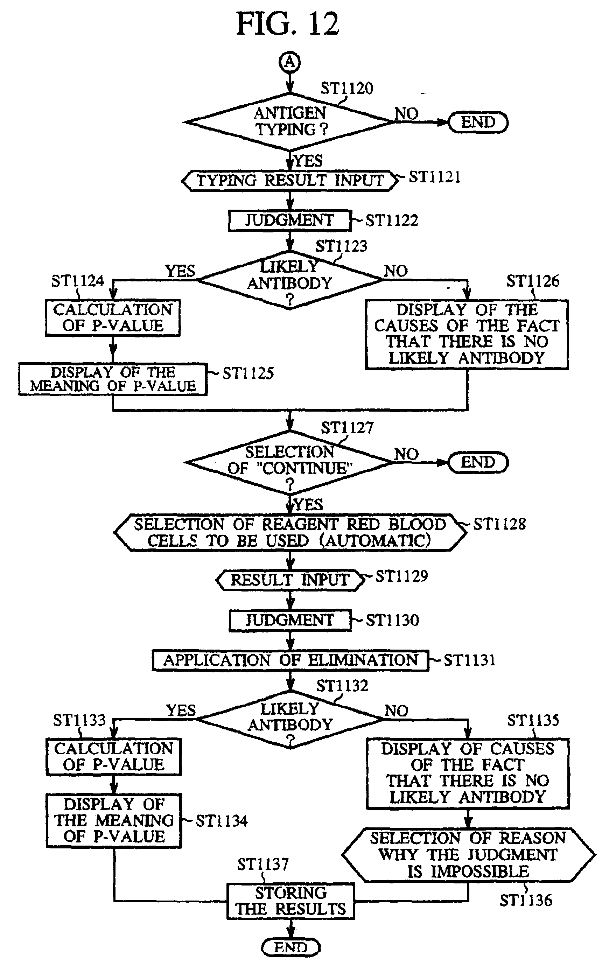

Figs. 11 and 12 are flowcharts showing the detailed operations of antibody identification procedure in the step ST607 of Fig. 6. After a specimen ID is input from the main menu (step ST1101) or the sequence shifts from a test result input window (step ST1102), identification mode is input (step ST1103). Thereafter, the selection of reagent red blood cells to be used and its identification are performed using an elimination method (steps ST1104 to ST1106). This identification procedure is performed mainly for the purpose of screening irregular antibodies. Therefore, a few kinds of reagent red blood cells are used for identification. In this case, coincidence of a likely antibody pattern is obtained at the step ST1107, an antibody existence probability value (p-value) is calculated and the probability and mathematical expression for this calculation are displayed (steps ST1108 and ST1109). When the coincidence of likely antibody pattern is not obtained, the reasons for the fact that there is no coincidence of likely antibody pattern are displayed (step ST1110).

Next, when "continue" is selected (step ST1111), the selection of the reagent red blood cells to be used is performed (step ST1112). In this selection, plural kinds of reagent red blood cells stored in the facility are displayed so that a test performing person can select some kinds of reagent red blood cells. Therefore, this eases the selection of reagent red blood cells. And the test is performed by using the selected reagent red blood cells and judgment of identification of antibody is performed with an elimination method (steps ST1113 and ST1114). Further, when coincidence of likely antibody pattern is obtained at the step ST1115, antibody existence probability value (p-value) is calculated and the probability and mathematical expression for this calculation are displayed (steps ST1116 and ST1117). When the coincidence of likely antibody pattern is not obtained, causes of the fact that there are no coincidence of likely antibody pattern are displayed (step ST1118).

Next, when "continue" is selected (step ST1119), whether or not antigen typing is to be performed or not is selected (step ST1120), and when the antigen typing is selected to perform, antigen typing to the antigen corresponding to the antibody whose existence is not denied and the result of the antigen typing is input (step ST1121). Taking this result of the antigen typing into account, identification of antibodies is performed (step ST1122). In this case, if a certain antigen which corresponds to antibody whose existence cannot be denied is identified, the existence of the antibody is practically denied. Further, when coincidence of likely antibody pattern is obtained at the step ST1123, antibody existence probability value (p-value) is calculated and meaning of the probability and mathematical expression for this calculation are displayed (steps ST1124 and ST1125), and when the coincidence of likely antibody pattern is not obtained, causes of the fact that there are no coincidence of likely antibody pattern are displayed (step ST1126). Next, when "continue" is selected (step ST1127), a selection of reagent red blood cells to be used is performed (step ST1128). In selection procedure of reagent red blood cells to be used, a proposed combination of plural kinds of reagent red blood cells is displayed, which include kinds of the reagent red blood cells which are positive to only one of antibodies which cannot be eliminated and kinds of the reagent red blood cells which are negative to the antibodies which cannot be eliminated. A test performing person selects reagent red blood cells among the proposed combination and a test is carried out using the selected reagent blood cells. Therefore, this eases the selection of reagent blood cells to be used next. The result of the test using the selected reagent red blood cells is input (step ST1129). A judgment of the test is performed using an elimination method (steps ST1130 and ST1131). At this time, the coincidence of likely antibody pattern is obtained (step ST1132), antibody existence probability value (p-value) is calculated and the probability and mathematical expression for this calculation are displayed (steps ST1133 and ST1134). When the coincidence of likely antibody pattern is not obtained, the reasons for the fact that there are no coincidence of likely antibody patterns and reasons why the judgment cannot be possible are displayed (steps ST1135 and ST1136). The sequences from the step ST1134 and from the step ST1136 shift to the step ST1137 where the result of antibody identification is stored and the whole procedure is terminated.

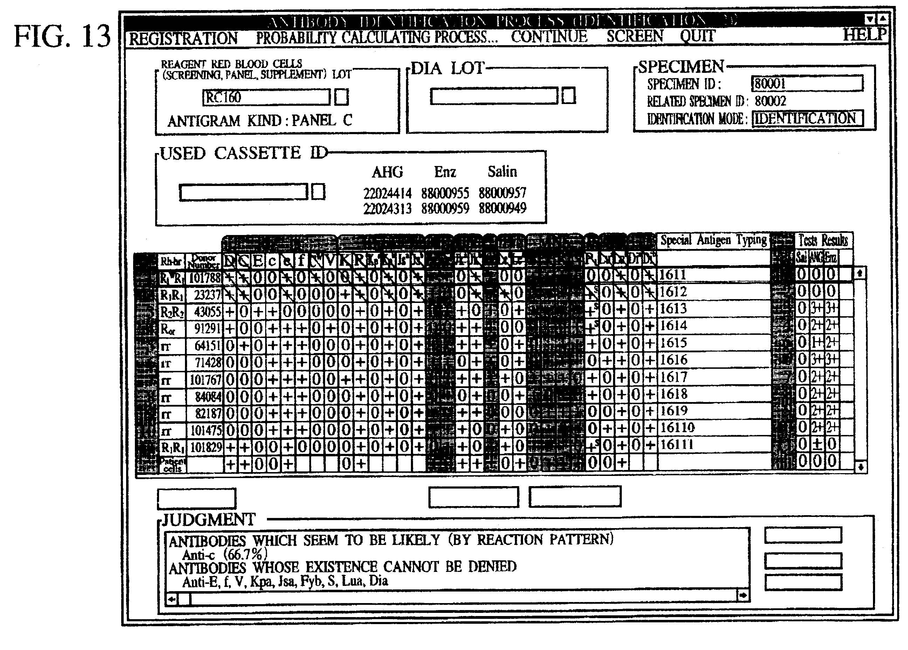

Fig. 13 is a figure showing a window where antibody identification is performed referring to antigen profile (antigram (trademark)) with an elimination method. As shown in the lower portion of the figure, antibodies whose existence is considered to be likely and antibodies whose existence cannot be denied are displayed with probability values.

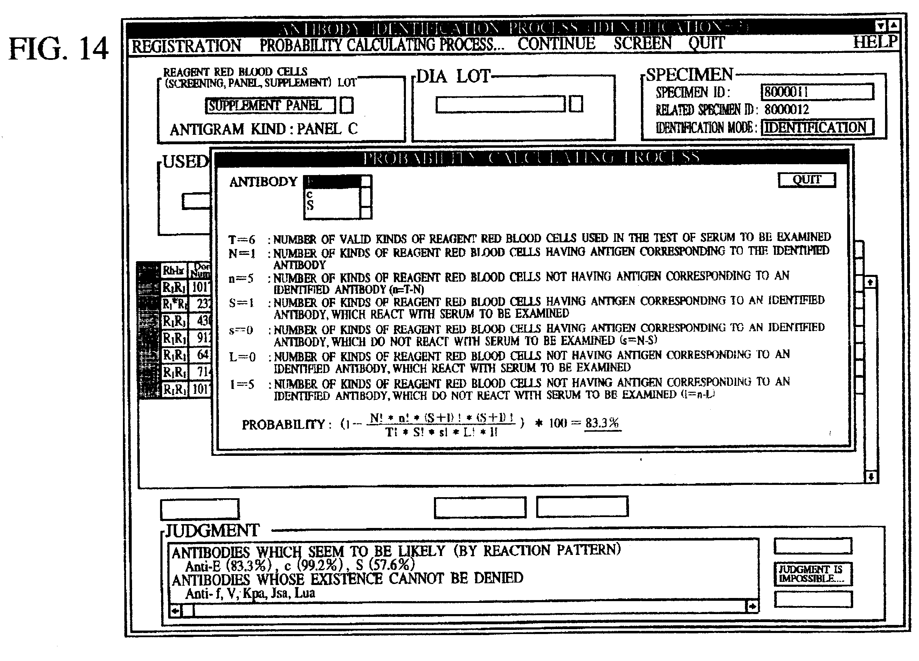

Fig. 14 is a figure showing a window where antibody identification is performed using supplemental reagent red blood cells after the antibody identification indicated in Fig. 13 is completed. As shown in Fig. 14, antibodies whose existence are considered to be likely and antibodies whose existence cannot be denied are different from those indicated in Fig. 13. Further, in the current window indicated in Fig. 14, how the probability of existence of E antibody is calculated is displayed. Namely, probability of identification of antibody is calculated based on the mathematical expression indicated at the bottom line of the current window of Fig. 14.

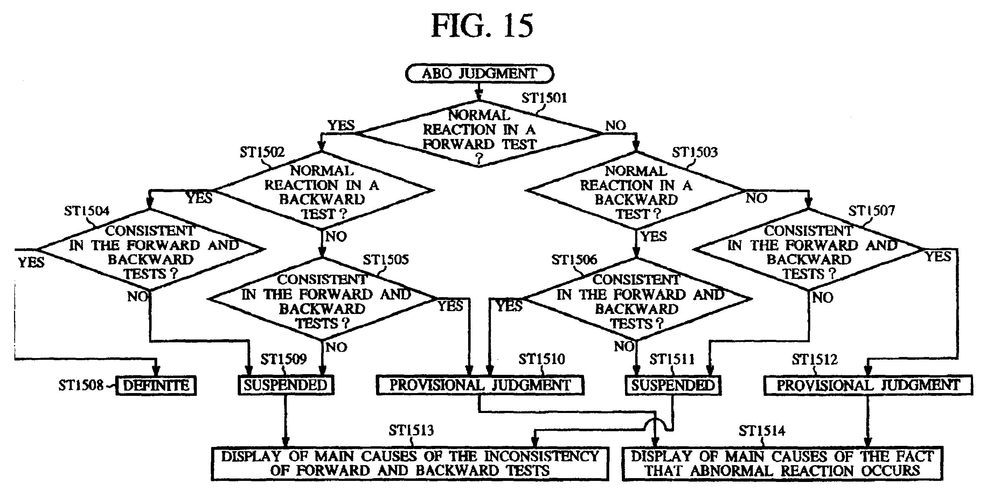

Fig. 15 is a flowchart showing the operations of the ABO typing which is a test among the blood tests of the step ST906 of Fig. 9. As shown in Fig. 15, it is judged whether the reaction is normal or abnormal for each of the forward test and backward test of the ABO typing test (steps ST1501, ST1502 and ST1503). Further, it is judged whether the result of the forward test and the result of the backward test are coincident or not for all combinations of the tests (steps ST1504 to ST1507). The forward test is defined to be a test of patient's blood cells. Namely, in the forward test, anti-A serum (B type serum) and anti-B serum (A type serum) are used for determining the existence of A antigen and B antigen on the surfaces of the blood cells of the patient. The backward test is defined to be a test of patient's serum, and in the backward test, standard A type red blood cells and standard B type red blood cells are used for determining the existence of anti-A and anti-B antibodies included in the patient's serum. Only when both the forward test and the backward test show a normal reaction and the result of the forward test is identical to that of the backward test, the judgment of ABO typing becomes definite (step ST1508). When the result of the forward test is not identical to that of the backward test, the judgment is suspended (steps ST1509 and ST1511) and major causes of inconsistency of the forward test and backward test are displayed (step ST1513). At least one of the forward test and backward test does not show a normal reaction although the results of the forward test and backward test are consistent, the result is decided to be provisional (steps ST1510 and ST1512) and major causes of the fact that an abnormal reaction occurs are displayed (step ST1514).

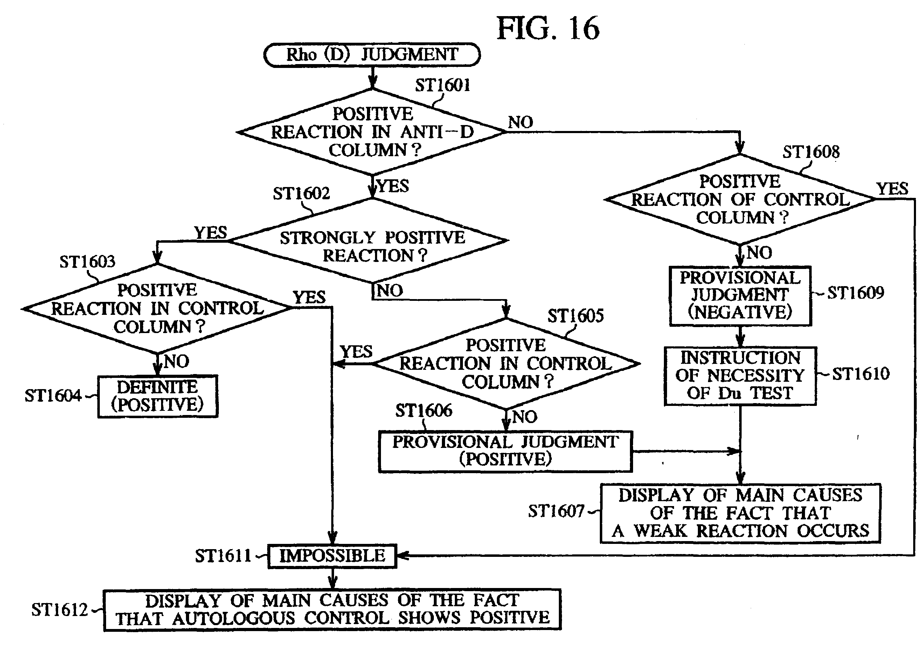

Fig. 16 is a flowchart showing operations of the judgment of the Rho (D) test which is a test among the blood tests of the step ST906 of Fig. 9. In this test, blood having D antigen is classified as Rh(+) and blood not having D antigen is classified as Rh(-). As shown in Fig. 16, when the reaction of the anti-D column of the reagent cassette shows positive (step ST1601), the reaction is strongly positive (step ST1602) and the reaction of the control column is negative (step ST1603), the test of Rho (D) is decided to be positive (step ST1604). When a strongly positive reaction is not obtained at the step ST1602 and the reaction of the control column is negative (step ST1605), the judgment of the test is decided to be provisionally positive (step ST1606) and major causes of the fact that a weak reaction occurs (step ST1607) are displayed. When the reaction of the anti-D column is negative (step ST1601) and the reaction of the control column is negative (step ST1608), the judgment of this test is decided to be provisionally negative (step ST1609), the necessity of performing a Du test is displayed (step ST1610) and the sequence shifts to step ST1607 where major causes of the fact that a weak reaction occurs are displayed. When the reaction of control column is positive at the steps ST1603, ST1605 and ST1608, the judgment of the Rho (D) test is decided to be impossible (step ST1611) and major causes of the fact that a reaction of the control column (autologous control) is positive are displayed (step ST1612).

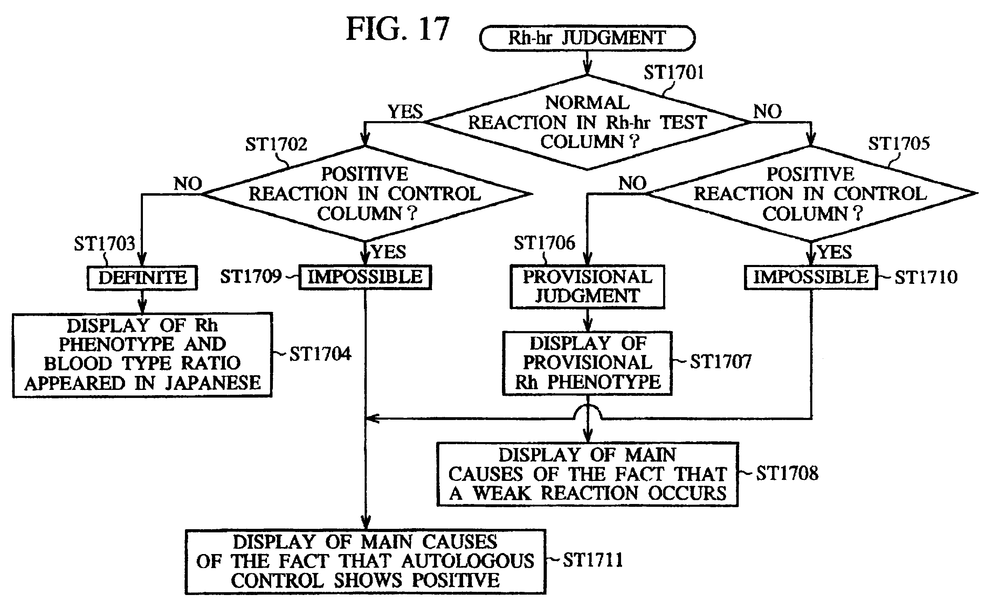

Fig. 17 is a flowchart showing the operations of the judgment of the Rh-hr test which is one test of the blood tests of the step ST906 of Fig. 9. At first, when the reaction of the Rh-hr test column is normal (step ST1701) and the reaction of the control column is negative (step ST1702), the judgment of the Rh-hr test is decided to be definite (step ST1703) and Rh phenotype and blood type ratio among Japanese are displayed (step ST1704). When the reaction of the Rh-hr test column is not normal and the reaction of the control column is negative (step ST1705), the result of the Rh-hr test is determined to be provisional (step ST1706) and provisional Rh phenotype is displayed (step ST1707) with the major causes of the fact that a weak reaction occurs (step ST1708). When the reaction of the control column is positive at the steps ST1702 or ST1705, judgment of result of the Rh-hr test is decided to be impossible (steps ST1709 and ST1710) and major causes of the fact that reaction of the control column (autologous control) is positive are displayed (step ST1711).

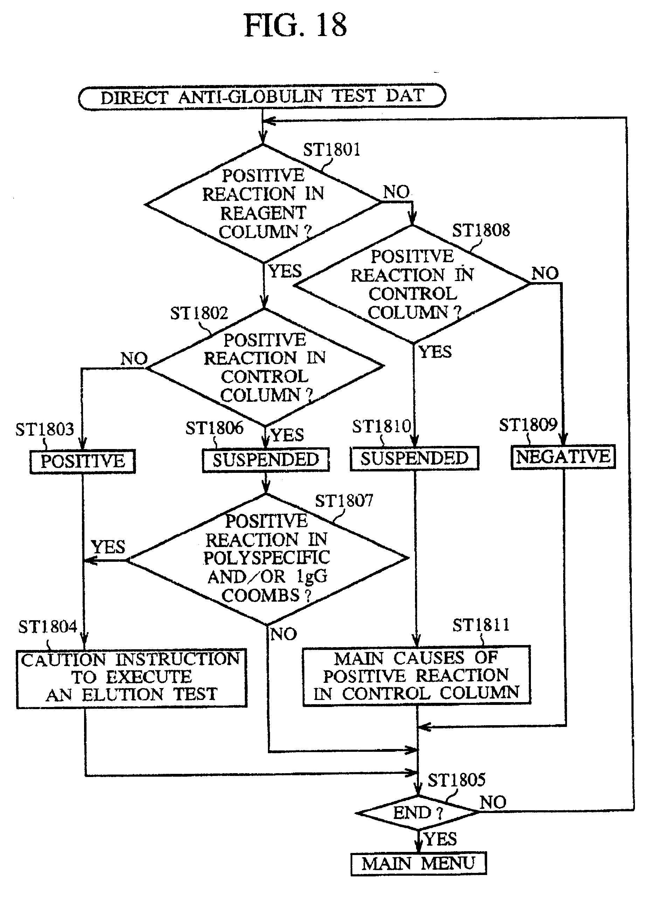

Fig. 18 is a flowchart showing the operations of the judgment of the Direct Anti-globulin Test (DAT) which is one test of the blood tests of the step ST906 of Fig. 9. The direct anti-globulin test is a test for determining whether antigen-antibody reaction has occurred inside a patient's body or not. At first, when the reaction of the column of the reagent cassette is positive (step ST1801), the reaction of the control column is taken into consideration. Then, when the reaction of the control column is negative (step ST1802), the direct anti-globulin test is determined to be positive (step ST1803). Thereafter, a warning to carry out an elution test is displayed (step ST1804). When the test is terminated (step ST1805), the sequence shifts back to the main menu, and when the test should continue, the sequence shifts to the step ST1801. When the reaction of the control column is positive at the step ST1802, the judgment of the result of the test is suspended (step ST1806). Thereafter, when at least one of a test using polyspecific coombs serum and a test using IgG coombs serum is positive (step ST1807), the sequence shifts to step ST1804 and a warning to carry out an elution test is displayed. When both the test using polyspecific coombs serum and the test using IgG coombs serum are negative, the sequence shifts to the step ST1805 where it is decided whether DAT should be terminated or not. On the other hand, when the reaction of the column of the reagent cassette is negative at step ST1801, the reaction of the control column is taken into consideration, and when the reaction of the control column is negative (step ST1808), the direct anti-globulin test is determined to be negative (step ST1809) and the sequence shifts to the step ST1805. On the other hand, when the reaction of the control column is positive at the step ST1808, the judgment of the result of the direct anti-globulin test is suspended (step ST1810), major causes of the fact that reaction of the control column is positive are displayed (step ST1811) and the sequence shifts to the step ST1805.

Further, in order to determine whether the antigen-antibody reaction has occurred in the past or it is occurring now, a monospecific coombs cassette (monospecific cassette) and a polyspecific coombs cassette (polyspecific cassette) are used.

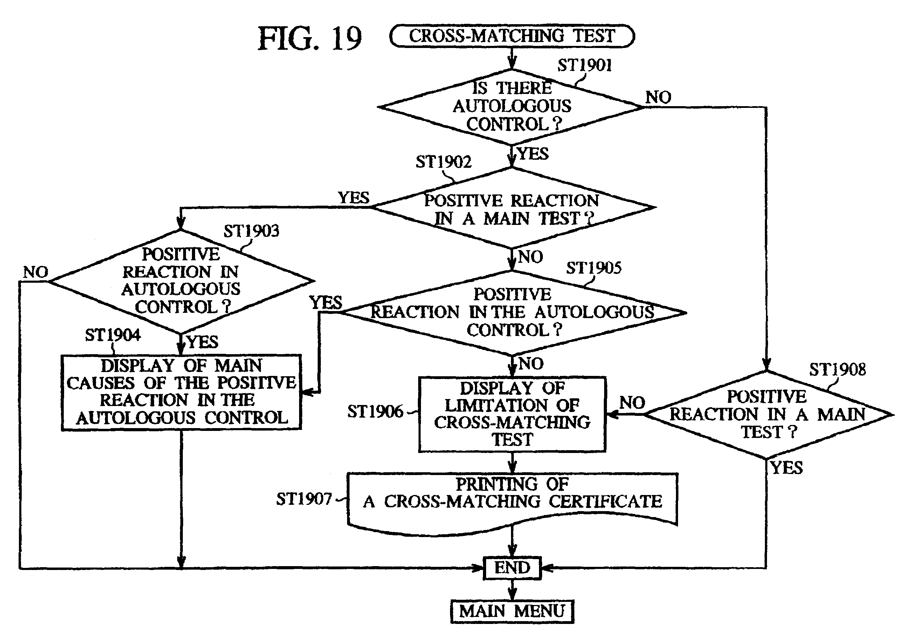

Fig. 19 is a flowchart showing the operations of the judgment of the cross-matching test which is selected at the cross-matching and irregular antibody dialog window displayed at step ST911 of Fig. 9. The cross-matching test is a test for determining whether agglutination occurs or not by causing an antigen-antibody reaction in a cassette, which could occur inside a patient's body when blood for transfusion and patient's blood are mixed.

At first, it is determined whether there is a control (autologous control) or not in this cross-matching test (step ST1901). This is previously set by the configuration of the program run at the facility station 200a. When there is an autologous control and a main test is positive (step ST1902), the result of the autologous control is taken into consideration, and when the result of the autologous control is positive (step ST1903), causes of the fact that the result of the autologous control is positive are displayed (step ST1904) and the sequence shifts back to the main menu. When the result of the autologous control is negative at the step ST1903, the whole procedure is terminated directly and the sequence shifts back to the main menu. Further, the result of the main test is negative and the result of the autologous control is positive (step ST1905), the sequence shifts to the step ST1904 and causes of the fact that the result of the control is positive are displayed. When the result of the control is negative at the step ST1905, the sentence meaning that the accuracy of the cross-matching test is limited is displayed (step ST1906), and a certificate of cross-matching test is printed out by the printer 202a of the facility station 200a (step ST1907), then the whole procedure is terminated and the sequence shifts back to the main menu. On the other hand, when there is not an autologous control at step ST1901, if the result of the main test is positive (step ST1908) the whole procedure is terminated, and if the result is negative, the sequence shifts to step ST1906, the sentence meaning that the accuracy of the cross-matching test is limited is displayed and a certificate of the cross-matching test is printed out (step ST1907).

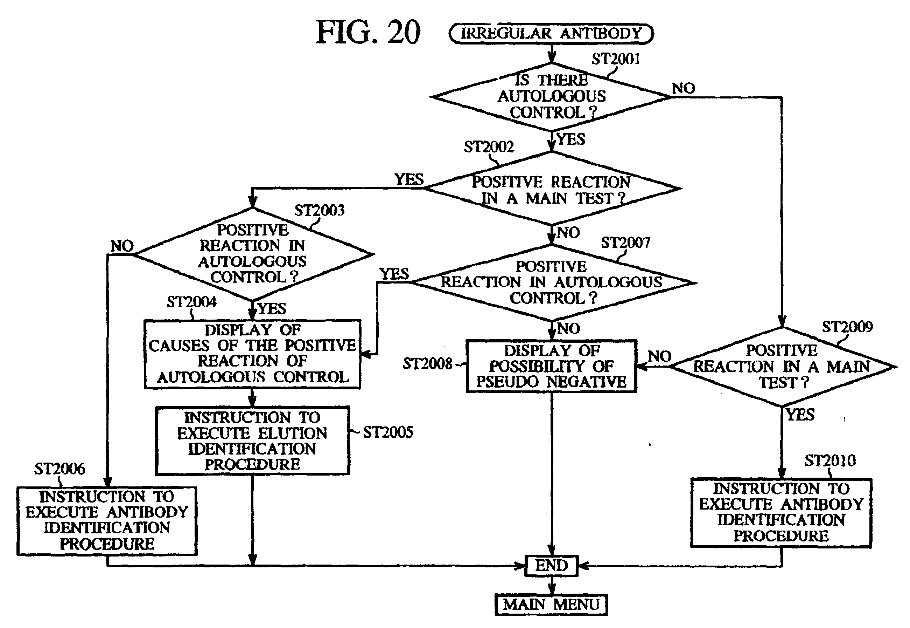

Fig. 20 is a flowchart showing the operations of the judgment of the irregular antibody test which is selected at the cross-matching and irregular antibody dialog window displayed at step ST911 of Fig. 9. The irregular antibody test (screening) is a test for detecting antibodies included in the serum of the blood of a donor, a patient and a pregnant woman, in advance at a high sensitivity, which may cause transfusion side effects and neonate laky blood illness by using O type red blood cells whose antigen profile has already been known. Agglutination reaction is investigated using the reagent red blood cells and patient's serum. When the agglutination occurs, identification of the antibody is performed.

At first, it is determined whether there is an autologous control or not in this irregular antibody test (step ST2001). This is previously set by the configuration of the program run at the facility station 200a. When there is an autologous control and a main test is positive (step ST2002), the result of the autologous control is taken into consideration. When the result of the autologous control is positive (step ST2003), causes of the fact that the result of the autologous control is positive are displayed (step ST2004). Thereafter, the instruction to carry out an elution identification test is displayed (step ST2005), then the whole procedure is terminated and the sequence shifts back to the main menu. When the result of the autologous control is negative at step ST2003, the instruction to carry out an antibody identification procedure is displayed (step ST2006) and the sequence shifts back to the main menu. Further, the result of the main test is negative at step ST2002 and the result of the autologous control is positive (step ST2007), the sequence shifts to the step ST2004 where causes of the fact that the result of the autologous control is positive are displayed, and when the result of the autologous control is negative at step ST2007, a sentence meaning that there is a possibility of a pseudo-positive is displayed (step ST2008), then the whole procedure is terminated and the sequence shifts back to the main menu. On the other hand, when there is not an autologous control at step ST2001 and the result of the main test is positive (step ST2009), an instruction to carry out an antibody identification procedure is displayed (step ST2010), the whole procedure is terminated and the sequence shifts back to the main menu. When the result is negative at step ST2009, the sequence shifts to step ST2008 where the possibility of a pseudo-negative is displayed.

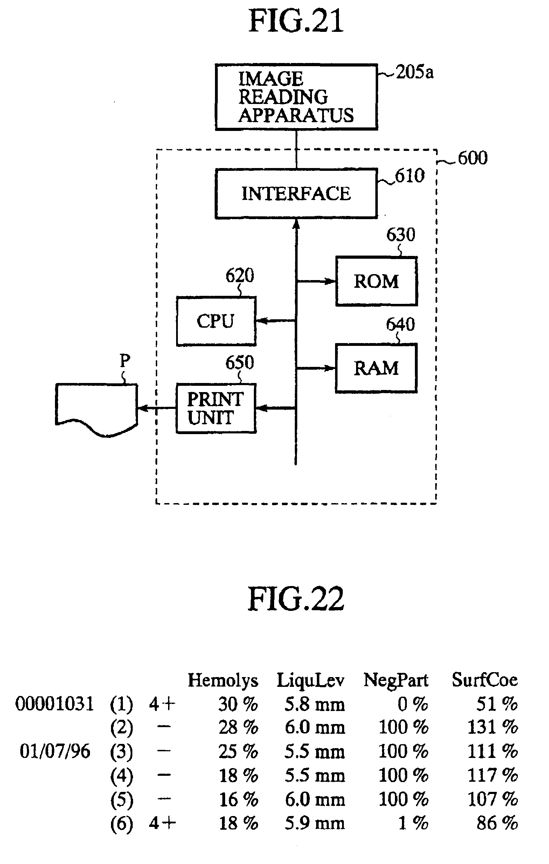

Next, the description will be made of a printer which is connected to the image processing apparatus 205a, for printing an agglutination state of the reagent cassette. Fig. 21 is a block diagram showing a structure of this printer. In the same figure, a reference numeral 600 denotes a printer for printing information transferred from the image processing apparatus 205a. The printer 600 includes an interface 610 for performing a communication process of the data translation with the image processing apparatus 205a, a CPU 620 for performing total processing for the printer 600, a ROM 630 in which programs and data are stored therein, a RAM 640 to which programs to be executed are loaded, and a print unit 650 for performing a print process of data inputted from the interface 610. In addition, a reference numeral 660 illustrates a data bus for performing a data connection among each part of the printer 600. Furthermore, a reference numeral P represents a print document outputted from the print unit 650.

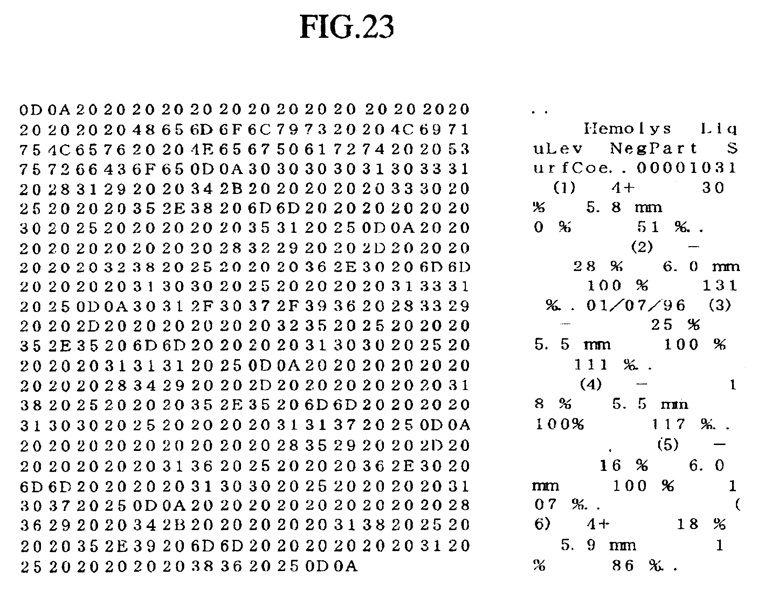

The image processing apparatus 205a images the reagent cassette by a CCD camera and so on, and its data is transferred to the printer 600. Fig. 22 is a diagram showing data outputted from the image processing apparatus 205a. The initial two numbers "00" in the "00001031" shows a classification of the reagent cassette, and the following "001031" shows the characteristic number of the reagent cassette. In addition, "01/07/96" indicates a date, and (1) to (6) shows column numbers of the reagent cassette. Further, "4+" which is next to the column number represents level of the agglutination, and is transferred by three byte data actually. Moreover, "Hemolysis" shows the rate of hemolysis reaction in a liquid phase which is located at the upper portion than the beads surface of the reagent cassette. "LiqLev" indicates a distance between the liquid surface located at the upper portion then the beads surface of the reagent cassette and the beads surface. If this value is lower than a predetermined value, it is recognized that the reagent and specimen are not distributed. "NegPart" is a value showing the rate of a negative part per the whole. And the rate of the number of pixels of the negative part in total read pixels is shown by percentage. "SurfCoe" is the percentage of total read out pixels for a objective specimen against to the number of standard read out pixels. In addition, Fig. 23 is a dump list showing the output state of these data by hexadecimal number.

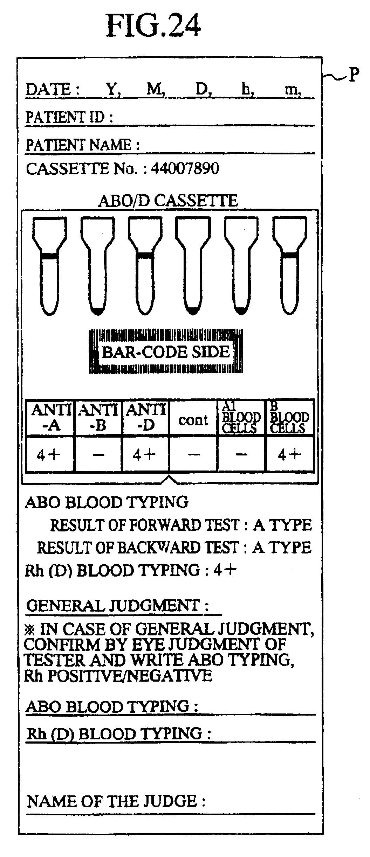

Fig. 24 is a diagram showing a concrete example of a printed document P outputted from the printer 600. As shown in the same figure, the reagent cassette image is printed on the printed document P, and by this printed document P, the level of the cassette agglutination is recognized by sight. Owing to this, it is different from the printout using only the cassette, recognition errors can be decreased with respect to the test result of the cassette.

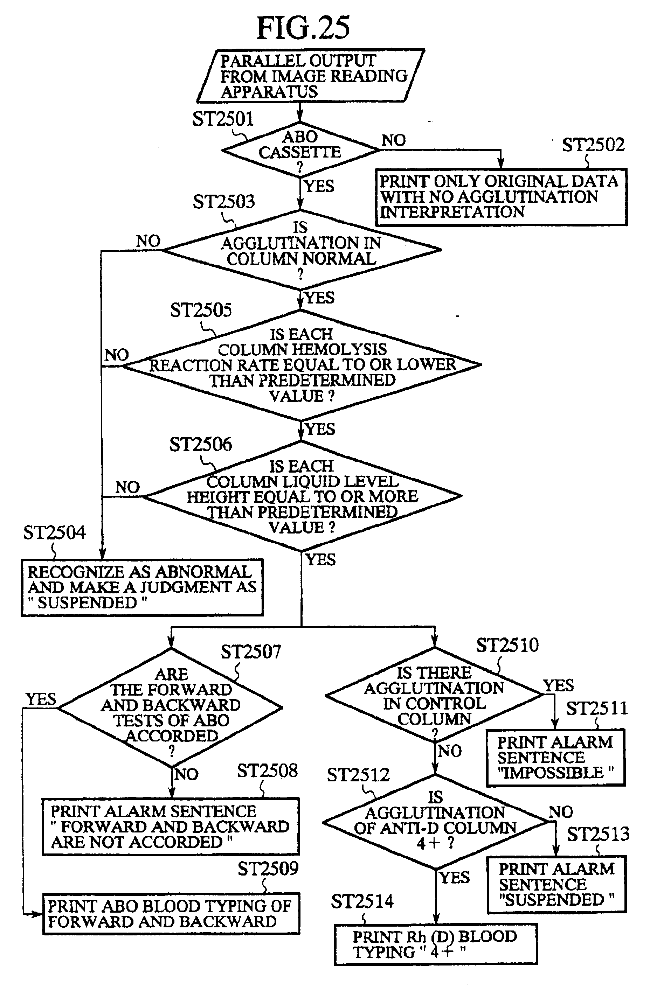

Fig. 25 is a flowchart showing a judgment interpretation printing process of data transmitted from the image processing apparatus 205a. At first, the judgment is performed of whether the data outputted form the image processing apparatus 205a is of the ABD cassette or not (step ST2501). This is identified by the data showing the classification of the cassette explained in Fig. 22. And when it is not of the ABD cassette in the judgment, the interpretation of the agglutination is not performed by only data is printed thereon (step ST2502). When it was the ABD cassette in the step ST2502, it is decided whether the agglutination in the cassette column is normal or not (step ST2503). In this judgment, if the agglutination data of each column is only one of "-", "W", "1+", "2+", "3+" and "4+", it is assumed as normal, and if the other data is transferred thereto, it is assumed as abnormal, so that the judgment is "suspend" (step ST2504). When the judgment is normal in the step ST2503, if the rate of hemolysis reaction is equal or lower than a predetermined value (step ST2505), whether the liquid surface height of each column is equal or more than a predetermined value is checked (step ST2506). In addition, when the judgments of the step ST2505 and the step ST2506 are "No", it goes to the step ST2504 and the blood judgment is assumed as "suspend".

When the liquid surface height of the each column is equal or more than the predetermined value in the step ST2506, whether the "forward" and "backward" test of the ABO typing are accorded or not is checked (step ST2507). This is judged by whether the forward test of the first and second columns and the backward test of the fifth and sixth column are accorded or not. As the result of the judgment, if it is not accorded, an alarm sentence as "Forward and backward tests are not accorded." is printed. If accorded, the interpretation of the ABO blood typing will be presented (step ST2509).

In addition, the liquid surface height of each column is equal or more than the predetermined value at the step ST2506, whether the agglutination of the control column (the fourth column) exists or not is checked (step ST2510). When the agglutination exists, an alarm sentence "Impossible" is printed (step ST2511). When it is decided that the agglutination does not exist in the step ST2510, whether the agglutination of the anti-D column is "4+" or not is judged (step ST2512), if the agglutination is not "4+", an alarm sentence "Suspend" is printed (step ST2513). On the other hand, if the agglutination is "4+" at the step ST2512, Rh (D) system blood type "4+" is printed (step ST2514).

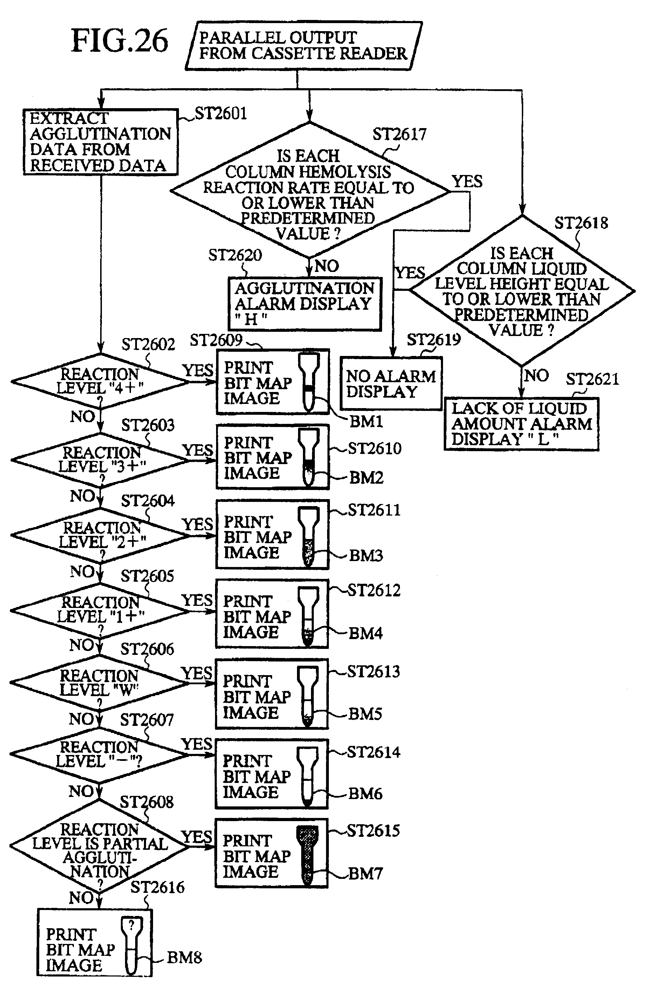

Next, description will be made of the column image for printing on the print document P and the alarm signs on every column. Fig. 26 is a flowchart showing the operations for the column image and the alarm signs on every column. Images of each column are stored previously in the ROM 630 of the printer 600 in Fig. 21 with eight bit map image system. Reference numerals BM1 to BM8 of Fig. 26 are diagrams showing these bit map images. In other words, the data "-", "W", "1+", ..., "4+" and so on is transferred from the image processing apparatus 205a in correspondence with the state of the agglutination, and the printer 600 selects the bit map images stored in the ROM 630 from these data to print on the print document P.

Firstly, the agglutination data is extracted from the received data from the image processing apparatus 205a (step ST2601). Then the bit map images BM1 to BM6 are selected (step ST2609 to step ST2614) in accordance with the reaction level of the agglutination (step ST2602 to step ST2607). In addition, the reference "-" shows that the level of the agglutination is "0", and the "W" shows that of low. Further, when the partial agglutination exists at the step ST2608, the bit map image BM7 is selected and printed. If the partial agglutination exists, since the "D" is added to the data of the reaction level of each column from the image processing apparatus 205a, the step ST2608 judges by the existence of this additional data. Moreover, when the step ST2602 to the step ST2608 are all "No", the bit map image BM8 having a mark "?" is printed at the step ST2616. This case corresponds to the case of a communication error or the case that the read out in the image processing apparatus 205a is not carried out normally.

On the other hand, when the rate of hemolysis reaction is equal or lower than the predetermined value and the liquid height of each column is equal or more than a predetermined value (step ST2618), the alarm is not carried out (step ST2619), and when the rate of hemolysis reaction is equal or more than the predetermined value at the step ST2617, an alarm "H" of the hemolysis reaction is printed (step ST2620), and when the liquid height is less than the predetermined value at the step ST2618, an alarm "L" for the lack of liquid amount is printed (step ST2621). For instance, when the rate of the hemolysis reaction is 55 percent or more at the fifth and sixth columns of the ABD cassette, the reference "H" showing the hemolysis reaction is printed, and when it is other column or other cassette, if this value is more than 50 percent, the "H" is printed.

As mentioned above, the printer 600 selects one of the eight bit map images stored in the ROM 630 from the data transferred from the image processing apparatus 205a, the image corresponding to the level of the agglutination of each column is printed to the print document. Accordingly, for example, when the image data of the bit map is transferred from the image processing apparatus 205a, extremely large amount data is required to transfer. However, without such large number of data transfer, the agglutination recognition of the columns can be easily performed, with the image print corresponding to the agglutination state being made possible at the printer side.

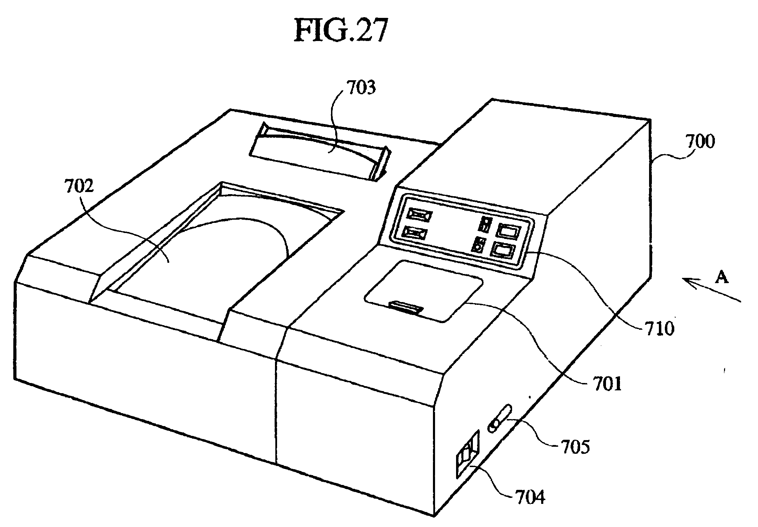

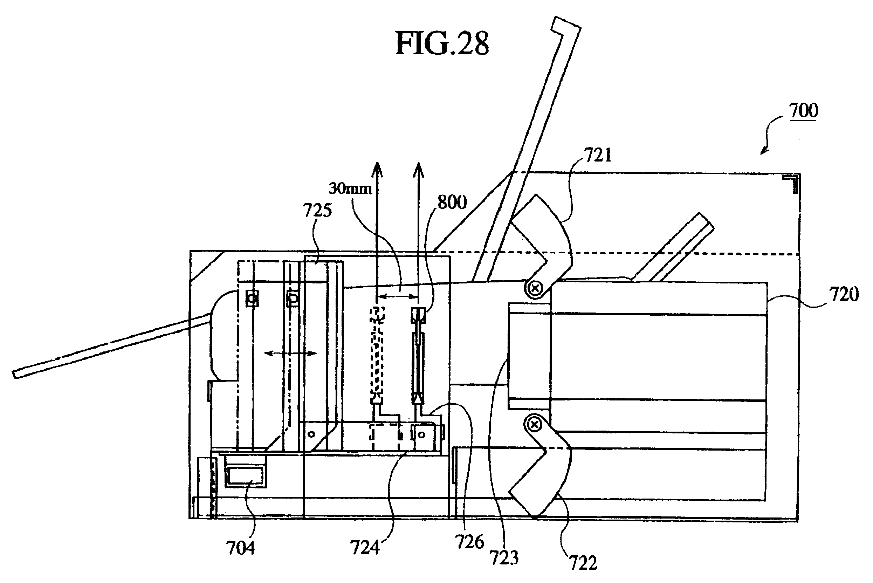

Next the description will be made of the cassette imaging apparatus for use by connecting to the terminal computer 201a of Fig. 1. Fig. 27 is an inclined view of the cassette imaging apparatus 700. In the same figure, a reference numeral 710 shows an operational panel, 701 denotes an opening for changing the reagent cassette, 702 illustrates a paper tray cover for supplying papers for printing an image, 703 represents a discharge tray for a sheet of printed paper, 704 indicates a power switch, 705 shows a slide lever for a multi-print. Fig. 28 is a side view of Fig. 27 in view from an arrow A. In the same figure, a reference numeral 720 denotes a CCD camera, 724 shows a movable chassis which can be moved right and left by the slide lever shown in Fig. 27, 725 denotes a plain light fixed in the movable chassis 724, and 726 shows a cassette holder fixed to the movable chassis 724 for holding the reagent cassette 800. In addition, a reference numeral 723 denotes a lens surface of the CCD camera 720. Further, reference numerals 721 and 722 illustrate lights for radiating light to the reagent cassette 800 which is an object from the side of the CCD camera. Moreover, the plain light 725 and cassette holder 723 are fixed to the movable chassis 724, and are slideable in the parallel direction of a light axis of the lens of the CCD camera 720, so that the distance between the plain light 725 and the reagent cassette 800 is constant, thereby to be formed such that the light is radiated to the reagent cassette from the CCD camera 720 and its opposite side. Similar parts are denoted by the same reference numerals as in Fig. 27 and the repetition of the explanation will be omitted.

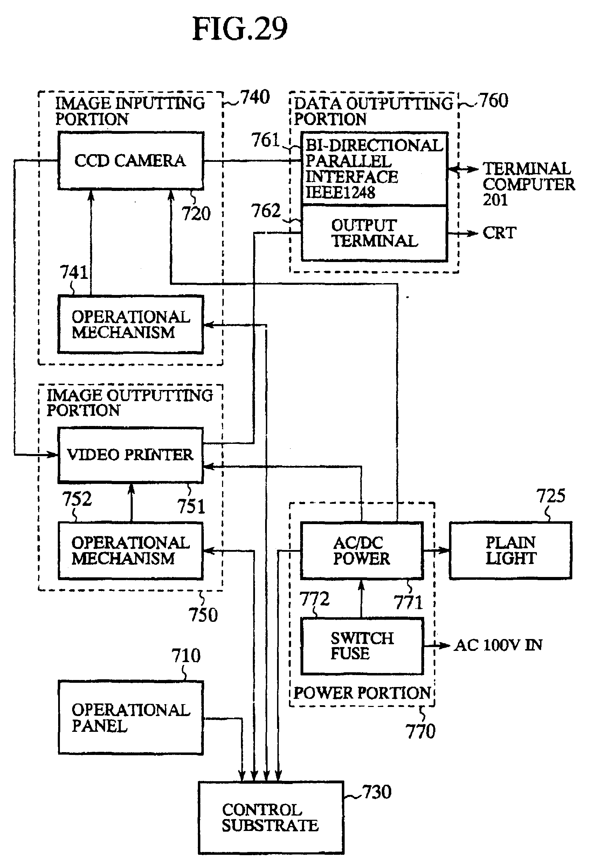

Fig. 29 is a block diagram showing an electrical arrangement of the cassette imaging apparatus 700 shown in Fig. 27 and Fig. 28. In Fig. 29, a reference numeral 740 denotes an image input portion for imaging the reagent cassette 800, 750 illustrates a image output portion for printing an image which is imaged by the image input portion 740, 760 shows a data output portion which is for transferring digital data of the imaged image to the terminal computer 201a by the image input portion 740, and which is outputting a video signal of the image output portion 750 to a CRT, and 770 shows a power portion for supplying a power.

The image input portion 740 has an operational mechanism 741 for controlling the CCD camera and the operation of this camera 720. In addition, the image output portion 750 has an operational mechanism 752 for controlling the video printer 751 and the operation of this video printer 751. The data output portion 760 has an output terminal 762 for outputting a video signal from the video printer 751 to the CRT by bi-directional parallel interface 761 for transferring the digital image signal transmitted from the CCD camera 720 to the terminal computer 201a. Further, the power portion 770 has an AC/DC power source 771 for converting a commercial AC 100 voltage into a predetermined voltage to supply to each of the cassette imaging apparatus 700 and a switch fuse 772. Moreover, the control substrate 730 executes the control for the operational mechanism 741 of the image input portion 740 and the operational mechanism 752 of the image output portion 750 by means of the instruction or so from the operational panel 710.

When a standard digital picture is taken by the cassette imaging apparatus 700, the reagent cassette 800 is put on the holder 726 from the cassette changing opening 701. Then the reagent cassette 800 is placed at s near portion SP of the CCD camera 720 by means of the slide lever 705, to image by the operation of the operational panel. The reagent cassette 800 as an object is radiated by the plain light and the lights 721 and 722 from the CCD camera 720 side, so that clear image can be obtained. On the other hand, in the case of a multi-print, i.e., the case that a plurality of images is printed on a sheet of paper, the imaging is performed such that the reagent cassette 800 is placed at a portion MP which is distant from CCD camera 720 by operating the slide lever 705. Even in this case, the distance between the plain light 725 and the reagent cassette 800 is constant, so that the amount of the light radiated from the plain light 725 to the reagent cassette 800 is suitable. Further, in this embodiment, the movable chassis 724 is shifted by only 30 mm by the slide lever 705.

The data imaged by the CCD camera 720 is transferred to the video printer 751 to print as a color print. On the other hand, the image data is also transferred to the terminal computer 201a via the bi-directional parallel interface 761. The terminal computer 201a has an image database of reagent cassette digital images related with the specimen ID, and each of the digital images is stored in the image database of the terminal computer 201a. The printed image can be used by attaching on the medical report and so on. The image data of the condition of the reagent cassette agglutination is stored in the database, whereby the actual agglutination state can be easily tested thereafter, and extremely clear images can be kept by the pictures, so that there is an effect for repetitive judgment confirmation.

### Industrial Applicability

The present invention can be applied to a blood test analyzing apparatus which is used in facilities such as hospitals, a blood test printing apparatus and a reagent cassette imaging apparatus which are used for this analyzing apparatus.
Fig. 1
   - 100: Center station
   - 110: Host computer
   - 150: Modem
   - 200a: Facility station
   - 204a: Modem
   - 205a: Image processing apparatus
   modem
Fig. 2
   (1) Reagent red blood cells; (2) Cassette; (3) Distribution; (4) Information concerning reagent red blood cells; (5) Receiving process; (6) Antigen profile information; (7) Input; (8) Reagent red blood cell DB; (9) Editing and deciding of antigen profile information; (10) Antigen profile table; (11) System mode information; (12) Transmission time setting; (13) Facility information; (14) Writing transmission data into FD; (15) Transmission schedule; (16) Transmission; (17) Instruction of transmission; (18) Not transmitted; (19) Information which has not been transmitted; (20) Instruction for transmission; (21) Extraction to FD; (22) A list of transmitted information and non-transmitted information; (23) Facility station
Fig. 3
   - 100: Center station
   (1) Specimen reception registration; (2) Specimen test result input; (3) Patient and specimen information input; (4) Irregular test and antibody identification; (5) Reception; (6) Reception data extraction and registration; (7) FD data extraction and registration; (8) Reagent red blood cell information DB; (9) Cassette information DB; (10) Patient information DB; (11) Specimen information DB; (12) Document print out; (13) Document
Fig. 6
   Start
   - ST601: Win NT password input
   - ST602: DMP password input
   - ST604: Reception of reagent red blood cells
   - ST605: Reception of specimen
   - ST606: Result input
   - ST607: Identification procedure
   - ST608: Utility
   - ST609: DB maintenance
   - ST610: Document
   - ST611: History of blood transfusion
   - ST612: Test result
   - ST613: Patient information
   - ST614: Test condition input
   - ST615: Retrieval
   - ST616: Screen display
   - ST617: Print out
   - ST618: Execution of print
   - ST619: End
   - ST620: End
Fig. 7
   - ST604: Reception of reagent red blood cells
   - ST704: Selection of transmission date
   - ST705: Selection of lot
   - ST706: Registration
   End
Fig. 8
   - ST605: Registration of patient and specimen
   - ST801: New specimen
   - ST802: Patient ID
   - ST803: Patient information
   - ST803a: The same name exists
   - ST803b: The same name alarm
   - ST804: Specimen ID
   - ST805: Specimen information
   - ST806: Requested test items
   - ST807: Already registered specimen
   - ST808: Patient ID
   - ST809: Patient information (added or changed)
   - ST810: Register
   - ST811: Specimen ID
   - ST812: Cassette registration
   - ST813: Cassette ID
   - ST814: Register
   - ST816: Patient information (added or changed)
   - ST817: Register (change)
   - ST818: End
   - ST819: Specimen ID
   - ST820: Specimen information
   - ST821: Requested test items
   - ST822: Cassette registration
   - ST823: Cassette ID
   - ST824: Register
Fig. 9
   - ST901: Cassette ID input (manual input/bar code reader)
   - ST902: Already registered
   - ST903: Display of specimen information
   - ST904: Result input
   - ST905: Register
   - ST906: Judgment (ABD, Rh-hr, DAT)
   - ST907: Abnormal reaction
   - ST908: Help information
   - ST909: Existence of cassette which have not input
   - ST910: Display of special dialog windows (cross-matching, irregular antibody, antibody identification procedure)
   - ST911: Cross-matching and irregular antibody dialog window
   - ST912: Antibody identification procedure initialization window
   - ST913: Specimen reception and registration window
   - ST914: Display of specimen information
   - ST915: Cassette ID input (by pull-down list)
Fig. 10
   (1) SPECIMEN TEST RESULT INPUT; (2) Screen; (3) Test result; (4) Quit; (5) Cassette ID; (6) Date of test; (7) Cassette type: Rh-hr cassette; (8) Help; (9) Specimen patient information; (10) Specimen ID; (11) Related specimen ID; (12) Patient ID; (13) Patient name: Taro Yamada; (14) Result of cassette; (15) Anti-D; (16) Anti-C; (17) Anti-E; (18) Anti-c; (19) Anti-e; (20) Registration; (21) Judgment (blood type ABD/DAT/Rh-hr); (22) Rh-hr judgment; (23) Judgment is impossible; (24) Judgment (others); (25) Irregular antibody; (26) Cross-matching; (27) Antibody identification
Fig. 11
   - ST1101: Specimen ID input
   - ST1102: Test result input screen
   - ST1103: Identification mode input
   - ST1104: Selection of reagent red blood cells to be used
   - ST1105: Judgment
   - ST1106: Application of elimination method
   - ST1107: Coincidence of likely antibody pattern
   - ST1108: Calculation of p-value
   - ST1109: Display of meaning of p-value
   - ST1110: Display of the causes of the fact that there is no data
   - ST1111: Selection of continue
   - (1): End
   - ST1112: Selection of reagent red blood cells to be used
   - ST1113: Judgment
   - ST1114: Application of elimination method
   - ST1115: Coincidence of likely antibody (whose existence is not denied at a previous test)
   - ST1116: Calculation of p-value
   - ST1117: Display of meaning of p-value
   - ST1118: Display of the causes of the fact that there is no data
   - ST1119: Selection of continue
   - (2): End
Fig. 12
   - ST1120: Antigen typing
   - (1): End
   - ST1121: Typing result input
   - ST1122: Judgment
   - ST1123: Likely antibody
   - ST1124: Calculation of p-value
   - ST1125: Display of p-value
   - ST1126: Display of the causes of the fact that there are no likely antibody
   - ST1127: Selection of continue
   - (2): end
   - ST1128: Selection of reagent red blood cells to be used
   - ST1129: Result input
   - ST1130: Judgment
   - ST1131: Application of elimination
   - ST1132: Likely antibody
   - ST1133: Calculation of p-value
   - ST1134: Display of the meaning of p-value
   - ST1135: Display of causes of the fact that there are no likely antibody
   - ST1136: Selection of reason why the judgment is impossible
   - ST1137: Storing the results
   - (3): End
Fig. 13
   (1) ANTIBODY IDENTIFICATION PROCESS (IDENTIFICATION -2); (2) Registration; (3) Probability calculating process; (4) Continue; (5) Screen; (6) Quit; (7) Reagent red blood cells (screening, panel, supplement) Lot; (8) Antigram kind; (9) Dia lot; (10) Specimen; (11) Specimen ID; (12) Related specimen ID; (13) Identification mode; (14) Identification; (15) Help; (16) Used cassette; (17) Judgment; (18) Antibodies which seem to be likely (by reaction pattern); (19) Antibodies whose existence cannot be denied
Fig. 14
   (1) ANTIBODY IDENTIFICATION PROCESS (IDENTIFICATION - 3); (2) Registration; (3) Probability calculating process; (4) Continue; (5) Screen; (6) Quit; (7) Reagent red blood cells (screening, panel, supplement) Lot; (8) Supplement panel; (9) Antigram kind; (10) Dia lot; (11) Specimen; (12) Specimen ID; (13) Related specimen ID; (14) Identification mode; (15) Identification; (16) help; (17) Used cassette; (18) Antibody; (19) Probability calculation process; (20) Quit; (21) Number of valid kinds of reagent red blood cells used in test of serum to be examined; (22) Number of kinds of reagent red blood cells having antigen corresponding to an identified antibody; (23) Number of kinds of reagent red blood cells not having antigen corresponding to an identified antibody; (24) Number of kinds of reagent red blood cells having antigen corresponding to an identified antibody, which react with serum to be examined; (25) Number of kinds of reagent red blood cells having antigen corresponding to an identified antibody, which do not react with serum to be examined; (26) Number of kinds of reagent red blood cells not having antigen corresponding to an identified antibody, which react with serum to be examined; (27) Number of kinds of reagent red blood cells not having antigen corresponding to an identified antibody, which do not react with serum to be examined; (28) Probability; (29) Judgment; (30) Antibodies which seem to be likely (by reaction pattern); (31) Antibodies whose existence cannot be denied; (32) Judgment is impossible
Fig. 15
   ABO judgment
   - ST1501: Normal reaction in a forward test
   - ST1502: Normal reaction in a backward test
   - ST1503: Normal reaction in a backward test
   - ST1504 to ST1507: Consistent in forward and backward
   - ST1508: Definite
   - ST1509: Suspended
   - ST1510: Provisional judgment
   - ST1511: Suspended
   - ST1512: Provisional judgment
   - ST1513: Display of main causes of inconsistency of forward and backward tests
   - ST1514: Display of main causes of the fact that abnormal reaction occurs
Fig. 16
   Rho (D) judgment
   - ST1601: Positive reaction of anti-D column
   - ST1602: Strongly positive reaction
   - ST1603: Positive reaction of control column
   - ST1604: Definite (positive)
   - ST1605: Positive reaction of control column
   - ST1606: Provisional judgment
   - ST1607: Display of the main causes of the fact that a weak reaction occurs
   - ST1608: Positive reaction of control column
   - ST1609: Provisional judgment (negative)
   - ST1610: Instruction of necessity of Du test
   - ST1611: Impossible
   - ST1612: Display of the main causes of the fact that autologous control shows positive
Fig. 17
   Rh-hr judgment
   - ST1701: Normal reaction of Rh-hr test column
   - ST1702: Positive reaction of control column
   - ST1703: Definite
   - ST1704: Display of Rh phenotype and blood type ratio appeared in Japanese
   - ST1705: Positive reaction of control column
   - ST1706: Provisional judgment
   - ST1707: Display of provisional Rh phenotype
   - ST1708: Display of the main causes of the fact that a weak reaction occurs
   - ST1709: Impossible
   - ST1710: Impossible
Fig. 18
   Direct anti-globulin test DAT
   - ST1801: Positive reaction of reagent column
   - ST1802: Positive reaction of control column
   - ST1803: Positive
   - ST1804: Caution for recommendation to execute an elution test
   - ST1805: End
   - ST1806: Suspended
   - ST1807: Positive reaction of polyspecific and/or IgG coombs
   - ST1808: Positive reaction of control column
   - ST1809: Negative
   - ST1810: Suspended
   - ST1811: Main causes of positive reaction of control column
Fig. 19
   Cross-matching test
   - ST1901: Is there autologous control ?
   - ST1902: Positive reaction of a main test
   - ST1903: Positive reaction of an autologous control
   - ST1904: Display of main causes of positive reaction of autologous control
   - ST1905: Positive reaction of autologous control
   - ST1906: Display of limitation of cross-matching test
   - ST1907: Printing of a cross-matching test certificate
   - ST1908: Positive reaction of a main test
   End
Fig. 20
   Irregular antibody
   - ST2001: There is autologous control ?
   - ST2002: Positive reaction of a main test
   - ST2003: Positive reaction of autologous control
   - ST2004: Display of causes of positive reaction of autologous control
   - ST2005: Instruction to execute elution identification test
   - ST2006: Instruction to execute antibody identification procedure
   - ST2007: Positive reaction of autologous control
   - ST2008: Display of possibility of pseudo negative
   - ST2009: Positive reaction of a main test
   - ST2010: Instruction to execute antibody identification procedure
   End
FIG. 21
   - 205a: Image reading apparatus
   - 610: Interface
   - 650: Print unit
Fig. 24
   (1) DATE: Y, M, D, h, m,
   (2) Patient ID
   (3) Patient name
   (4) Cassette No.
   (5) ABO/D cassette
   (6) Bar-code side
   (7) Anti-A
   (8) Anti-B
   (9) Anti-D
   (10) A1 blood cells
   (11) B blood cells
   (12) ABO blood typing
   (13) Result of forward test: A type
   (14) Result of backward test: A type
   (15) Rh(D) blood typing: 4+
   (16) General judgment:
      * In case of general judgment, confirm by eye judgment of tester and write ABO typing, Rh positive/negative.
   (17) ABO blood typing:
   (18) Rh (D) blood typing:
   (19) Tester name:
Fig. 25
   Parallel output from image reading apparatus
   - ST2501: ABO cassette?
   - ST2502: No agglutination interpretation and print only original data
   - ST2503: Is agglutination in column normal?
   - ST2504: Recognize as abnormal and judgment is made suspend
   - ST2505: Is each column hemolysis reaction rate lower equal or lower than predetermined value?
   - ST2506: Is each column liquid level height equal or more than predetermined value?
   - ST2507: Is the forward and backward test accorded?
   - ST2508: Print alarm sentence "Forward and backward is not accorded."
   - ST2509: Print ABO blood typing of forward and backward
   - ST2510: Is there agglutination of control column?
   - ST2511: Print alarm sentence "Impossible"
   - ST2512: Is agglutination of anti-D column 4+?
   - ST2513: Print alarm sentence "suspended"
   - ST2514: Print Rh (D) blood typing "4+"
Fig. 26
   Parallel output from cassette reader
   - ST2601: Extract agglutination data from received data
   - ST2602: Reaction level "4+" ?
   - ST2603: Reaction level "3+" ?
   - ST2604: Reaction level "2+" ?
   - ST2605: Reaction level "1+" ?
   - ST2606: Reaction level "W" ?
   - ST2607: Reaction level "-" ?
   - ST2608: Reaction level is partial agglutination?
   - ST2609 to ST2616: Bit map image print
   - ST2617: Is each column hemolysis reaction rate equal or lower than predetermined value?
   - ST2618: Is each column liquid level height equal or lower than predetermined value?
   - ST2619: No alarm display
   - ST2620: Agglutination alarm display "H"
   - ST2621: Lack of liquid amount alarm display "L"
Fig. 29
   - 720: CCD camera
   - 740: Image inputting portion
   - 741: Operational mechanism
   - 750: Image outputting portion
   - 751: Video printer
   - 752: Operational mechanism
   - 761: Bi-directional parallel interface IEEE1248
   - 762: Output terminal
   - 760: Data outputting portion Terminal computer 201
   - 770: Power portion
   - 771: AC/DC power
   - 772: Switch fuse
   - 725: Plain light
   - 710: Operational panel
   - 730: Control substrate

## Claims

1. A blood test analyzing apparatus for analyzing a blood test result in a case where said blood test is performed by using a reagent cassette which includes a plurality of columns and data area, one of an anti-serum reagent and buffer liquid being sealed into at least one of said plurality of columns, and data for specifying one of said anti-serum reagent and said buffer liquid being written in said data area, said apparatus comprising:
an inputting means for inputting a test result of said reagent cassette;
a data reading means for reading data written in said data area of said reagent cassette; and
a blood test analyzing means for analyzing a result of a blood test on the basis of said data read by said data reading means and said test result inputted by said inputting means.

2. A blood test analyzing apparatus according to claim 1, wherein a reagent cassette sealing one of an anti-serum reagent and buffer liquid which are required for determining a blood type into said plurality of columns as said reagent cassette is used, wherein said inputting means inputs a state of agglutination in a case where a test blood to be examined is put in said plurality of columns, and wherein said blood test analyzing means includes a blood typing judging means which judges a blood type of said test blood to be examined on the basis of said state of said agglutination.

3. A blood test analyzing apparatus according to claim 1, further comprising antigen profile information storing means for storing antigen profile information of reagent red blood cells, wherein said inputting means inputs a state of agglutination in a case where said reagent red blood cells and a test serum to be examined are put in said plurality of columns, and wherein said blood test analyzing means includes an antibody identification means which identifies and displays an antibody in said test serum to be examined on the basis of said antigen profile information and said state of said agglutination.

4. A blood test analyzing apparatus according to claim 3, wherein said antibody identification means includes a probability calculating means which calculates and displays an existence probability of said identified antibody and an existence probability of an antibody whose existence cannot be denied on the basis of said antigen profile information and said state of said agglutination.

5. A blood test analyzing apparatus according to any one of claims 3 and 4, wherein said antibody identification means includes an appropriate reagent red blood cell specifying means which specifies and displays appropriate reagent red blood cells to be used in a supplemental blood transfusion test based on said antigen profile information and said state of said agglutination in a case where there remains an antibody whose existence cannot be denied as a result of an execution of antibody identification.

6. A blood test analyzing apparatus according to any one of claims 1 to 5, further comprising an abnormality cause data base in which abnormal patterns of a result of an analysis performed by said blood test analyzing means and possible causes corresponding to said abnormal patterns are stored with relationship therebetween, and wherein said blood test analyzing means includes an abnormality cause displaying means which displays a possible cause for said abnormality by referring to said abnormality cause data base when a result of said blood test shows abnormality.

7. A blood test analyzing apparatus according to any one of claims 1 to 6, wherein said inputting means inputs a state of agglutination in at least one of said plurality of columns of said reagent cassette in a case where serum of a recipient who receives blood by a blood transfusion and donated blood cells are put therein, wherein said blood test analyzing means makes a judgment of a cross-matching test on the basis of said state of said agglutination inputted from said inputting means, and said blood test analyzing apparatus further including a printing means for printing a certificate of said cross-matching test when said judgment shows adaptability as a result of said cross-matching test.

8. A blood test analyzing apparatus according to any one of claims 1 to 6, wherein said inputting means inputs a state of agglutination in at least one of said plurality of columns of said reagent cassette in a case where blood cells of a recipient who receives blood by a blood transfusion and donated serum are put therein, wherein said blood test analyzing means makes a judgment of a cross-matching test on the basis of said state of said agglutination inputted from said inputting means, and said blood test analyzing apparatus further including a printing means for printing a certificate of said cross-matching test when said judgment shows adaptability as a result of said cross-matching test.

9. A blood test analyzing apparatus according to any one of claims 1 to 8, wherein a reagent cassette ID for specifying said reagent cassette is written in said data area of said reagent cassette, and said blood test analyzing apparatus further comprising: a reagent cassette information data base in which information concerning reagent cassettes is stored with reagent cassette IDs of reagent cassettes which are used in a blood test; a blood recipient information data base in which data concerning blood recipients is stored with recipient IDs for specifying recipients who receive blood by a blood transfusion; a specimen data base in which information concerning specimens used for said blood test; and a data base retrieving means for retrieving these data bases.

10. A blood test analyzing apparatus according to any one of claims 3 to 9, further comprising a receiving means for receiving antigen profile information transmitted from an outside portion via a data transmission line, wherein said antigen profile information storing means stores antigen profile information received by said receiving means.

11. A blood analyzing apparatus according to any one of claims 1 to 10, wherein said inputting means includes: image inputting means for inputting an image of said plurality of columns of said reagent cassette; and a test result decision means for deciding a result of a test on the basis of an image inputted by said image inputting means.

12. A blood analyzing apparatus according to claim 9, wherein an alarm is occurred in a case where a recipient having same name already exists when a recipient name is inputted into said blood recipients data base.

13. A blood test printing apparatus for printing a test result by receiving data from an image processing apparatus, which processing an image to a reagent cassette having a plurality of columns, and which outputs data corresponding to a level of agglutination in a column, comprising:
a memory in which a plurality of bit map images showing a state of agglutination corresponding to a level of agglutination in said column;
a data extracting means for extracting agglutination level data showing a level of agglutination from said image processing apparatus; and
a printing means for selecting and printing a bit map image corresponding to agglutination level data extracted by said data extracting means in each of said column.

14. A reagent cassette imaging apparatus for imaging a state of agglutination of each column of a reagent cassette having a plurality of columns, comprising:
a camera for imaging said reagent cassette;
a supporting member which is placed at forward portion of a lens of said camera, and for supporting a holder for holding said reagent cassette; and
a plain light which is provided to a portion distant from said holder at opposite side of said camera on said supporting member to radiate said reagent cassette.

15. A reagent cassette imaging apparatus according to claim 14, wherein said holding member is movable in parallel direction to a light axis of said lens of said camera.

16. A reagent cassette image data management system in which said camera transfers digital image data to said blood test analyzing apparatus defined in claim 1, wherein said blood test analyzing apparatus stores said image data to an image database formed by referring with a specimen ID to manage.
